# EUROPEAN PATENT APPLICATION

(11) **EP 4 827 124 A1**
(43) Date of publication of application: **21.10.2026**
(21) Application number: 24915215.8
(22) Date of filing: 28.12.2024
(51) Int. Cl.: H04W 4/16, G06Q 30/0251, H04W 4/23

(54) **COMMUNICATION METHOD, COMMUNICATION DEVICE, COMMUNICATION SYSTEM, AND READABLE STORAGE MEDIUM**

(30) Priority: 05.01.2024 CN 202410024198
(71) Applicant: Huawei Technologies Co., Ltd., Shenzhen, Guangdong 518129 (CN)
(72) Inventor: ZHANG, Yongjing, Shenzhen, Guangdong 518129 (CN); WANG, Yan, Shenzhen, Guangdong 518129 (CN); ZHOU, Xiaoyun, Shenzhen, Guangdong 518129 (CN); ZHANG, Jidong, Shenzhen, Guangdong 518129 (CN)
(74) Representative: Goddar, Heinz J.
(86) International application number: PCT/CN2024/143532
(87) International publication number: WO 2025/146001

(57) **Abstract**

This application relates to the field of communication technologies, and in particular, to a communication method, a communication apparatus, a communication system, and a readable storage medium. The method includes: In a process of a call between a first user and a second user, a first network element recognizes a communication intent of the first user based on communication content sent by the first user to the second user. Then, the first network element sends, to a second network element, information used to describe the communication intent, so that the second network element generates intent service information based on the information used to describe the communication intent, and returns the intent service information to the first network element. The first network element provides an intent service for the second user and/or the first user based on the intent service information. In embodiments of this application, an intent service based on a communication intent of a user can be provided for the user in a call process of the user, thereby improving communication efficiency.

## Description

This application claims priority to Chinese Patent Application No. 202410024198.0, filed with the China National Intellectual Property Administration on January 5, 2024 and entitled "COMMUNICATION METHOD, COMMUNICATION APPARATUS, COMMUNICATION SYSTEM, AND READABLE STORAGE MEDIUM", which is incorporated herein by reference in its entirety.

### TECHNICAL FIELD

This application relates to the field of communication technologies, and in particular, to a communication method, a communication apparatus, a communication system, and a readable storage medium.

### BACKGROUND

The International Telecommunication Union Radiocommunication Sector (international telecommunication union radiocommunication sector, ITU-R) has proposed six scenarios for international mobile telecommunications (international mobile telecommunications, IMT) 2030. On the one hand, there are connectivity enhancement scenarios for a 5th generation mobile communication technology (5th generation mobile communication technology, 5G), including immersive communication, ultra-reliable and low-latency communication, and massive communication. On the other hand, there are new scenarios, including ubiquitous connectivity, artificial intelligence (artificial intelligence, AI) and communication integration, and sensing and communication integration. It can be understood that a development path before 5G involves an evolution of communication and connectivity, focusing on "connectivity of everything"; and future communication technologies, such as a 6th generation mobile communication technology (6th generation mobile communication technology, 6G), incorporate additional resources and capabilities in dimensions such as computing, intelligence, data, and sensing based on connectivity enhancement, targeting "intelligent connectivity of everything". In short, the future communication technologies, such as 6G networks, are networks integrating communication (or connectivity), computing, intelligence, data, and sensing, and can implement intelligent connectivity of everything.

"Everything" in "intelligent connectivity of everything" can be understood as humans (natural persons), machines (physical devices), digital beings (digital intelligent humans), and agents (intelligent robots) that access future networks (such as the 6G network). "Intelligent connectivity" in "intelligent connectivity of everything" can be understood as follows: Centering on users (such as individuals or enterprises), information exchange between humans, machines, digital beings, and agents is driven by user intents, and native capabilities in communication (communication), sensing (sensing), computing (computing), data (data), and intelligence (intelligence) are used to ultimately achieve the communication intents or the communication purposes of the users.

Currently, a network can provide only deterministic services for users. For example, intelligent customer services, entertainment calling, simultaneous interpretation, content sharing, and screen sharing in 5G new calling are all services provided based on deterministic services (or predefined functions). However, how to provide intent services for users based on communication intents (with uncertainty) of users in a call process of the users needs to be explored.

### SUMMARY

Embodiments of this application provide a communication method, a communication apparatus, a communication system, and a readable storage medium, to provide users with intent services based on communication intents of the users, thereby improving communication efficiency.

The following describes this application from different aspects. It should be understood that the following implementations and beneficial effects of different aspects may be mutually referenced.

An "intent service" in this application may be understood as a service (service) related to an intent (intent). The service (service) may be understood as an act or process of providing assistance, meeting a requirement, or performing a task for a user.

According to a first aspect, this application provides a communication method. The method includes: A first network element recognizes, based on communication content sent by a first terminal to a second terminal, a communication intent of a first user using the first terminal. The first network element sends, to a second network element, information used to describe the communication intent. The first network element receives, from the second network element, first intent service information corresponding to the communication intent, and provides a first intent service for the second terminal and/or the first terminal based on the first intent service information.

For example, that the first network element recognizes, based on the communication content sent by the first terminal to the second terminal, the communication intent of the first user using the first terminal includes: The first network element recognizes, based on the communication content sent by the first terminal to the second terminal and communication content sent by the second terminal to the first terminal, the communication intent of the first user using the first terminal. In other words, the first network element may recognize the communication intent of the first user based on the communication content exchanged between the first terminal and the second terminal or based only on the communication content sent by the first terminal to the second terminal.

For example, the first network element may be a network intelligent agent function (network intelligent agent function, NIAF), and the second network element may be an intent service function (intent service function, ISF). For descriptions of the NIAF and the ISF, refer to the following embodiments. Details are not described herein.

In this application, in a call process of a user, a network side recognizes a communication intent of the user in communication content of the user, generates, based on the communication intent, intent service information corresponding to the communication intent, and then provides a corresponding intent service for the user based on the intent service information. In this way, the intent service based on the communication intent (with uncertainty) of the user can be provided for the user, thereby improving communication efficiency.

With reference to the first aspect, in a possible implementation, the information used to describe the communication intent includes one or more of the following: a category of the communication intent, a topic of the communication intent, a keyword of the communication intent, or semantics of the communication intent. In other words, after the first network element recognizes the communication intent of the first user, the first network element may process the recognized communication intent to obtain the information used to describe the communication intent. For example, the semantics of the communication intent may be semantics based on a text description, or may be semantics obtained through embedding (embedding) processing using a vectorization technology, namely, a semantic vector.

With reference to the first aspect, in a possible implementation, before the first network element sends, to the second network element, the information used to describe the communication intent, the method further includes: The first network element sends a first query message to a third network element, where the first query message is used to query for the second network element supporting the communication intent. The first network element receives a first response message from the third network element, where the first response message includes information about the second network element. The information about the second network element may include but is not limited to one or more of the following: an access address of the second network element (such as an application programming interface (application programming interface, API), a uniform resource locator (uniform resource locator, URL), or a medium access control (medium access control, MAC) address of the second network element), an identifier of the second network element, or a name of the second network element. It may be understood that the information about the second network element may be used to determine the second network element.

For example, the third network element may be an intent service registration function (intent service registration function, ISRF). For descriptions of the ISRF, refer to the following embodiments. Details are not described herein.

For example, the first query message includes the semantic vector of the communication intent. A similarity between a registration information vector of the second network element and the semantic vector of the communication intent is greater than a threshold. Alternatively, the second network element includes network elements corresponding to top K similarities in a plurality of similarities sorted in descending order, where the plurality of similarities include a similarity between the semantic vector of the communication intent and a registration information vector of each of a plurality of network elements stored in the third network element, and K is a positive integer. In other words, the third network element may be used as a vector database to store vectorized network element registration information (when the network elements are registered, vectorization processing is performed on original registration information of the network elements, and the processed registration information vectors and the original registration information are stored in association with each other), and after receiving the first query message, may perform similarity calculation based on the semantic vector of the communication intent and the registration information vectors of the network elements stored in the third network element, to return information about second network elements with high similarities (such as top K similarities, or similarities greater than the threshold).

It may be understood that due to the uncertainty of the communication intent of the user, in this application, after recognizing the communication intent of the user, the first network element may not be able to determine which network element in a network can provide the intent service corresponding to the communication intent. Therefore, in this application, a network element (namely, the third network element) that manages intent services in the network is queried for the second network element that can support the communication intent, so that the second network element can generate corresponding intent service information based on the information used to describe the communication intent, to provide the corresponding intent service for the user.

With reference to the first aspect, in a possible implementation, that the first network element provides the first intent service for the second terminal and/or the first terminal includes: The first network element sends the first intent service information to the second terminal and/or the first terminal. Alternatively, the first network element sends second intent service information to the second terminal and/or the first terminal, where the second intent service information may be a result obtained by processing the first intent service information based on a capability of the second terminal and/or a capability of the first terminal. For example, the second intent service information is intent service information obtained by processing a presentation form of the first intent service information to match an information display capability of the second terminal and/or an information display capability of the first terminal.

It may be understood that, that the first network element provides the first intent service for the second terminal includes: The first network element sends the first intent service information or the second intent service information to the second terminal, where the second intent service information is a result obtained by processing the first intent service information based on the capability of the second terminal. That the first network element provides the first intent service for the first terminal includes: The first network element sends the first intent service information or the second intent service information to the first terminal, where the second intent service information is a result obtained by processing the first intent service information based on the capability of the first terminal. That the first network element provides the first intent service for the second terminal and the first terminal includes: The first network element sends the first intent service information to the second terminal and the first terminal, or the first network element sends the second intent service information to the second terminal, and sends fourth intent service information to the first terminal, where the second intent service information is a result obtained by processing the first intent service information based on the capability of the second terminal, and the fourth intent service information is a result obtained by processing the first intent service information based on the capability of the first terminal.

In this application, intent services adapted to terminal capabilities are provided for different terminals, so that better display effects can be achieved on the terminals.

With reference to the first aspect, in a possible implementation, before the first network element provides the first intent service for the second terminal and/or the first terminal, the method further includes: The first network element sends an address of the first network element to the second terminal and/or the first terminal. The first network element receives a first message from the second terminal and/or the first terminal, where the first message is used to obtain the first intent service. When the first network element provides the first intent service for the second terminal and/or the first terminal, the first network element may provide the first intent service for the second terminal and/or the first terminal based on the first message.

In this application, the first network element actively notifies a terminal of the address of the first network element, so that the terminal can obtain an intent service from the first network element.

With reference to the first aspect, in a possible implementation, before the first network element provides the first intent service for the second terminal and/or the first terminal, the method further includes: The first network element establishes a communication connection to the second terminal and/or the first terminal. When the first network element provides the first intent service for the second terminal and/or the first terminal, the first network element provides the first intent service for the second terminal and/or the first terminal through the communication connection.

For example, that the first network element establishes the communication connection to the second terminal and/or the first terminal includes: The first network element sends a media session request (such as a session initiation protocol (session initiation protocol, SIP) invite (SIP INVITE) message) to the second terminal and/or the first terminal, and negotiates, by using the media session request, to establish a media streaming transmission session (such as a real-time transport protocol (real-time transport protocol, RTP) session). The first network element receives a media session response from the second terminal and/or a media session response from the first terminal, to establish the media streaming transmission session. Then, the first network element may provide the first intent service for the second terminal and/or the first terminal by using the media streaming transmission session (such as the RTP session). In this application, a new communication connection (or a new media streaming transmission session) is established to provide the intent service, with little impact on existing call content.

With reference to the first aspect, in a possible implementation, after the first network element provides the first intent service for the second terminal and/or the first terminal, the method further includes: The first network element receives operation information from the first terminal and/or the second terminal, where the operation information includes an operation event of the first user and/or an operation event of a second user using the second terminal for the first intent service. The first network element sends the operation information to the second network element. The first network element receives third intent service information from the second network element, where the third intent service information is intent service information obtained by updating the first intent service information based on the operation event. The first network element provides a second intent service for the second terminal and/or the first terminal based on the third intent service information.

For example, that the first network element provides the second intent service for the second terminal and/or the first terminal includes: The first network element triggers the first terminal and/or the second terminal to perform a task corresponding to the third intent service information. For example, the first network element sends an instruction to the first terminal and/or the second terminal, to instruct execution of the task corresponding to the third intent service information.

With reference to the first aspect, in a possible implementation, before the first network element receives the third intent service information from the second network element, the method further includes: The first network element sends one or more of the following to the second network element: digital identity authorization information of the first user or digital identity authorization information of the second user, where the digital identity authorization information of the first user or the digital identity authorization information of the second user is used to generate the third intent service information with reference to the operation event.

With reference to the first aspect, in a possible implementation, before the first network element receives, from the second network element, the first intent service information corresponding to the communication intent, the method further includes: The first network element sends one or more of the following to the second network element: digital human information of the first user, digital human information of the second user, personalized information of the first user, and personalized information of the second user, where the digital human information of the first user, the digital human information of the second user, the personalized information of the first user, or the personalized information of the second user is used to generate the first intent service information with reference to the information used to describe the communication intent.

With reference to the first aspect, in a possible implementation, before the first network element recognizes, based on the communication content sent by the first terminal to the second terminal, the communication intent of the first user using the first terminal, the method further includes: The first network element receives the communication content from a user plane network element, where the communication content is transmitted by using a session between the first terminal and the second terminal, and the user plane network element serves the session.

For example, before the first network element receives the communication content from the user plane network element, the method further includes: The first network element receives a second message from the first terminal, where the second message includes information indicating the session, and the second message indicates that the first network element is to be inserted into the session. The first network element sends a first request message to a fourth network element, where the first request message is used to request to establish a connection between the first network element and the user plane network element serving the session, and the first request message includes the address of the first network element. It may be understood that when subsequently providing the intent service for the second terminal and/or the first terminal, the first network element may provide the intent service for the second terminal and/or the first terminal through the connection.

For example, after receiving the second message, the first network element may query the network for the fourth network element corresponding to the session, and send the first request message to the fourth network element. In a possible implementation, the second message may further include an identifier of the first terminal. After receiving the second message, the first network element may query the network for the fourth network element corresponding to the first terminal, and then send the first request message to the fourth network element.

For example, the fourth network element may be an intelligent session management function (intelligent session management function, ISMF). For descriptions of the ISMF, refer to the following embodiments. Details are not described herein.

For example, the second message further includes indication information, and the indication information indicates that a transmission direction of the communication content is from the first terminal to the second terminal. The first request message further includes the second indication information. The second indication information may be used by the user plane network element to select the communication content to be sent to the first network element.

With reference to the first aspect, in a possible implementation, before the first network element recognizes, based on the communication content sent by the first terminal to the second terminal, the communication intent of the first user using the first terminal, the method further includes: The first network element receives the communication content from a media network element, where the communication content is sent by the first terminal to the second terminal via the media network element and the first network element. For example, the communication content being sent by the first terminal to the second terminal via the media network element and the first network element includes: The communication content is sent by the first terminal to the second terminal by using a session, and the session is a session between the first terminal, the media network element, the first network element, and the second terminal.

For example, before the first network element receives the communication content from the media network element, the method further includes: The first network element receives a session invite message or a session re-invite message from the first terminal, where the session invite message is used to establish the session that is between the first terminal and the second terminal and that passes through the media network element and the first network element, and the session re-invite message is used to modify the session between the first terminal and the second terminal, to insert the first network element into the session. The first network element forwards, to the first terminal, a session invite response or a session re-invite response returned by the second terminal, where the session invite response or the session re-invite response is used to accept the session invite message or the session re-invite message.

For example, before the first network element receives the communication content from the media network element, the method further includes: The first network element receives a third message from the first terminal, where the third message includes information indicating the session between the first terminal and the second terminal, and the third message indicates the first network element to transmit, by using the session, intent service information with the media network element serving the session. The first network element sends a fourth message to the media network element, where the fourth message includes the information indicating the session, and the fourth message is used to request to transmit the intent service information by using the session. The first network element receives a fifth message from the media network element, where the fifth message indicates agreement to transmit the intent service information by using the session. For example, the fourth message may be a session re-invite message (namely, SIP re-invite), the SIP re-invite message includes a newly added media line (m-line), and the m-line may be used to negotiate with the media network element to transmit the intent service information by using the session. The fifth message may be a session re-invite response, where the session re-invite response may be used to agree to transmit the intent service information by using the session.

According to a second aspect, this application provides a communication method. The method includes: A first terminal sends communication content to a second terminal, where the communication content includes a communication intent of a first user using the first terminal. The first terminal receives first intent service information corresponding to the communication intent, and invokes an application associated with the first intent service information to output the first intent service information.

For example, a path on which the first terminal sends the communication content to the second terminal is as follows: The first terminal first sends the communication content to a base station 1 connected to the first terminal. Then, the base station 1 sends the communication content to a user plane function 1 to which the first terminal belongs. The user plane function 1 separately sends the communication content to a first network element and a user plane function 2 to which the second terminal belongs. The user plane function 2 sends the communication content to a base station 2 connected to the second terminal. The base station 2 sends the communication content to the second terminal.

With reference to the second aspect, in a possible implementation, a presentation form of the first intent service information matches an information display capability of the first terminal.

With reference to the second aspect, in a possible implementation, before the first terminal receives the first intent service information corresponding to the communication intent, the method further includes: The first terminal receives an address of the first network element. The first terminal sends a first message to the first network element, where the first message is used to obtain the first intent service information.

With reference to the second aspect, in a possible implementation, before the first terminal receives the first intent service information corresponding to the communication intent, the method further includes: The first terminal establishes a communication connection to the first network element. That the first terminal receives the first intent service information corresponding to the communication intent includes: The first terminal receives, through the communication connection, the first intent service information corresponding to the communication intent. For a manner in which the first terminal establishes the communication connection to the first network element, refer to related descriptions of the first aspect. Details are not described herein.

With reference to the second aspect, in a possible implementation, after the first terminal invokes a first application associated with the first intent service information to output the first intent service information, the method further includes: The first terminal generates operation information in response to an operation event of the first user for the first intent service information. The first terminal sends the operation information to the first network element or a second network element. The first terminal receives second intent service information, where the second intent service information is intent service information obtained by updating the first intent service information based on the operation event.

For example, after the first terminal receives the second intent service information, the method further includes: The first terminal invokes, based on the second intent service information, an application associated with the second intent service information to perform a task corresponding to the second intent service information.

With reference to the second aspect, in a possible implementation, the communication content is transmitted by using a session between the first terminal and the second terminal. Before the first terminal receives the first intent service information corresponding to the communication intent, the method further includes: The first terminal sends a second message to the first network element, where the second message includes information indicating the session, and the second message indicates that the first network element is to be inserted into the session.

For example, that the first terminal receives the first intent service information corresponding to the communication intent includes: The first terminal receives a user plane message from a user plane network element serving the session, where a payload (payload) of the user plane message carries the first intent service information.

For example, the second message further includes indication information, and the indication information indicates that a transmission direction of the communication content is from the first terminal to the second terminal.

With reference to the second aspect, in a possible implementation, the communication content is transmitted by using a session between the first terminal and the second terminal. Before the first terminal receives the first intent service information corresponding to the communication intent, the method further includes: The first terminal sends a third message to the first network element, where the third message includes information indicating the session, and the third message indicates the first network element to transmit, by using the session, the first intent service information with a media network element serving the session.

For example, the first terminal receives a media plane message from the media network element serving the session, where a payload (payload) of the media plane message carries the first intent service information.

According to a third aspect, this application provides a communication apparatus. The communication apparatus is configured to perform the method according to any one of the first aspect or the possible implementations of the first aspect. The communication apparatus includes a unit for performing the method according to any one of the first aspect or the possible implementations of the first aspect.

According to a fourth aspect, this application provides a communication apparatus. The communication apparatus is configured to perform the method according to any one of the second aspect or the possible implementations of the second aspect. The communication apparatus includes a unit for performing the method according to any one of the second aspect or the possible implementations of the second aspect.

In the third aspect or the fourth aspect, the communication apparatus may include a transceiver unit and a processing unit. For detailed descriptions of the transceiver unit and the processing unit, refer to apparatus embodiments provided below. For beneficial effects of the third aspect and the fourth aspect, refer to related descriptions of the first aspect and the second aspect. Details are not described herein.

According to a fifth aspect, this application provides a communication apparatus. The communication apparatus includes a processor, configured to perform the method according to any one of the first aspect, the second aspect, or the possible implementations of the first aspect or the third aspect. Alternatively, the processor is configured to execute a program stored in a memory, and when the program is executed, the method according to any one of the first aspect, the second aspect, or the possible implementations of the first aspect or the second aspect is performed.

With reference to the fifth aspect, in a possible implementation, the memory is located outside the communication apparatus.

With reference to the fifth aspect, in a possible implementation, the memory is located inside the communication apparatus.

In this application, the processor and the memory may alternatively be integrated into one component. In other words, the processor and the memory may alternatively be integrated together.

With reference to the fifth aspect, in a possible implementation, the communication apparatus further includes a transceiver, and the transceiver is configured to send or receive information.

According to a sixth aspect, this application provides a communication apparatus. The communication apparatus may include a processor and an interface circuit, and the processor is connected to the interface circuit. The interface circuit is configured to exchange (or receive and send or input and output) information or data. The processor is configured to run program instructions, so that the communication apparatus performs the method according to any one of the first aspect, the second aspect, or the possible implementations of the first aspect or the second aspect. The interface circuit may be a communication interface or a transceiver. The transceiver may be a radio frequency module, a combination of a radio frequency module and an antenna, or an input/output interface of a chip or a circuit in the communication apparatus.

According to a seventh aspect, this application provides a readable storage medium. The readable storage medium stores program instructions. When the program instructions are executed by a computer, the computer is caused to perform the method according to any one of the first aspect, the second aspect, or the possible implementations of the first aspect or the second aspect.

According to an eighth aspect, this application provides a program product including program instructions. When the program product runs, the method according to any one of the first aspect, the second aspect, or the possible implementations of the first aspect or the second aspect is performed.

According to a ninth aspect, this application provides an apparatus. The apparatus may be implemented in a form of a chip, or may be implemented in a form of a device. The apparatus includes a processor. The processor is configured to: read a program stored in a memory and execute the program, to perform the communication method according to any one or more of the first aspect, the second aspect, or the possible implementations of the first aspect or the second aspect. Optionally, the apparatus further includes the memory, and the memory is connected to the processor by using a circuit. Further, optionally, the apparatus further includes a communication interface, and the processor is connected to the communication interface. The communication interface is configured to receive to-be-processed information. The processor obtains the information from the communication interface, processes the information, and outputs a processing result through the communication interface. The communication interface may be an input/output interface.

In a possible implementation, the processor and the memory may be physically independent units, or the memory may be integrated with the processor.

According to a tenth aspect, this application provides a communication system. The communication system includes a first network element and a second network element. Optionally, the communication system further includes a first terminal and/or a second terminal. The first network element may be configured to perform the method according to any one of the first aspect or the possible implementations of the first aspect. The second network element may be configured to: receive information from the first network element, and/or send information to the first network element. The first terminal may be configured to perform the method according to any one of the second aspect or the possible implementations of the second aspect.

For technical effects achieved in the foregoing aspects, mutual reference may be made, or reference may be made to beneficial effects in the following method embodiments. Details are not described herein.

### BRIEF DESCRIPTION OF DRAWINGS

FIG. 1 is a diagram of a concept of semantic communication according to an embodiment of this application;
FIG. 2 is a simplified diagram of a communication system according to an embodiment of this application;
FIG. 3 is a diagram of a possible application scenario according to an embodiment of this application;
FIG. 4 is a simplified schematic flowchart of a communication method according to an embodiment of this application;
FIG. 5 is a first schematic flowchart of a communication method according to an embodiment of this application;
FIG. 6 is a second flowchart of a communication method according to an embodiment of this application;
FIG. 7 is a third schematic flowchart of a communication method according to an embodiment of this application;
FIG. 8 is a fourth schematic flowchart of a communication method according to an embodiment of this application;
FIG. 9 is a fifth schematic flowchart of a communication method according to an embodiment of this application;
FIG. 10 is a sixth schematic flowchart of a communication method according to an embodiment of this application;
FIG. 11 is a diagram of a structure of an RTP message header extension according to an embodiment of this application;
FIG. 12 is a seventh schematic flowchart of a communication method according to an embodiment of this application;
FIG. 13 is an eighth schematic flowchart of a communication method according to an embodiment of this application;
FIG. 14 is a diagram of a structure of a communication apparatus according to an embodiment of this application;
FIG. 15 is a diagram of another structure of a communication apparatus according to an embodiment of this application; and
FIG. 16 is a diagram of still another structure of a communication apparatus according to an embodiment of this application.

### DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may indicate A or B. The term "and/or" in this specification describes only an association relationship for describing associated objects and represents that three relationships may exist. For example, A and/or B may represent the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c, where a, b, and c each may be singular or plural.

In the descriptions of this application, words such as "first" and "second" are merely used to distinguish between different objects, and do not limit a quantity and an execution sequence. In addition, the words such as "first" and "second" do not indicate a definite difference. In addition, the terms "including" and "having" and any other variants thereof are intended to cover a non-exclusive inclusion. For example, processes, methods, systems, products, devices, or the like that include a series of steps or units are not limited to listed steps or units, but instead, optionally further include steps, units, or the like that are not listed, or optionally further include other steps or units inherent to these processes, methods, products, devices, or the like.

In this application, the term "example" or "for example" is used to represent giving an example, an illustration, or a description. Any embodiment or design scheme described as "example", "such as", or "for example" in this application should not be explained as being more preferred or having more advantages than another embodiment or design scheme. Exactly, use of the term "example", "such as", "for example", or the like is intended to present a related concept in a specific manner.

It should be understood that in this application, both "when" and "if" mean that an apparatus performs corresponding processing in an objective situation, are not intended to limit time, do not require the apparatus to necessarily have a determining action during implementation, and do not mean another limitation.

In this application, "simultaneous" may be understood as "at a same time point", may be understood as "in a time period, or may be understood as "in a same periodicity". In some scenarios, "simultaneous" may also be understood as "in parallel". This may be specifically understood with reference to a context.

In this application, unless otherwise specified, an element indicated in a singular form is intended to indicate "one or more", but does not indicate "one and only one".

In addition, the terms "system" and "network" may be used interchangeably in this specification.

It may be understood that in embodiments of this application, similar expressions such as "B corresponding to A" and "B corresponding to/associated with A" indicate that there is a correspondence between A and B, and B may be determined based on A. It should be further understood that determining/generating B based on A does not mean that B is determined/generated based only on A, and B may alternatively be determined/generated based on A and/or other information.

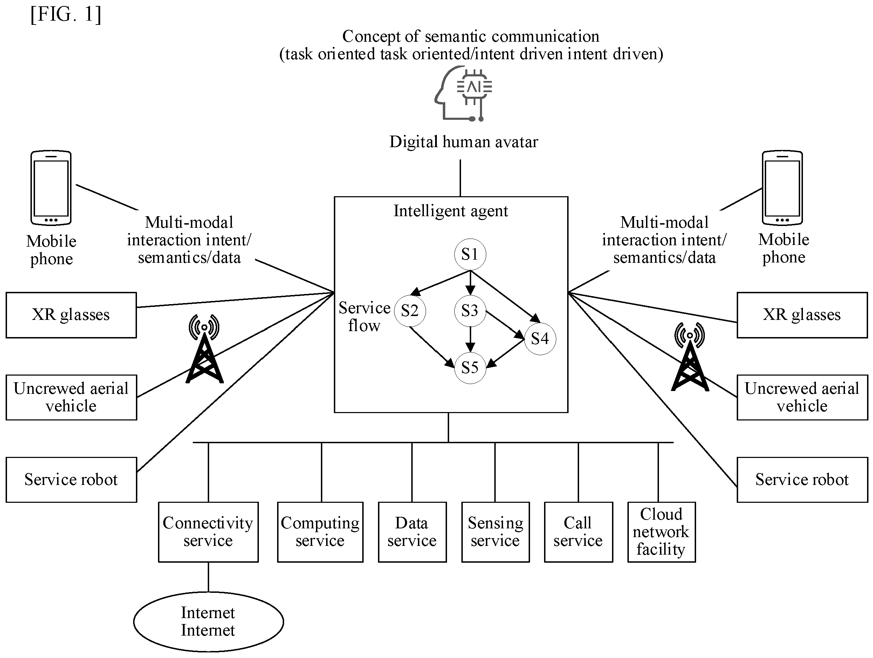

In this application, "intelligent connectivity of everything" may be understood as a type of "semantic communication". "Semantic communication" may also be understood as task oriented (task oriented) or intent driven (intent driven) communication. For example, centering on users (such as individuals or enterprises), multi-modal information exchange between humans, machines, digital beings, and agents is driven by intents or purposes of the users, and native capabilities in communication, sensing, computing, data, and intelligence are used to ultimately achieve the communication intents or the communication purposes of the users. This is referred to as "semantic communication". FIG. 1 is a diagram of a concept of semantic communication according to an embodiment of this application. As shown in FIG. 1, a device accessing a network, such as a mobile phone, extended reality (extended reality, XR) glasses, an uncrewed aerial vehicle, or a service robot, may perform multi-modal intent/semantic/data exchange with an intelligent agent (which may be a network element) in the network. The intelligent agent uses a connectivity service, a computing service, a data service, a sensing service, a call service, a cloud network facility, and the like of the network to achieve a communication intent or a communication purpose of a user.

It may be understood that in the field of artificial intelligence, "multi-modal" may typically refer to sensing information such as an image, a text, and a voice, and a multi-modal input can help artificial intelligence more accurately understand an external world. "Multi-modal information" in this application may be understood as information (or data) of a plurality of modalities (Modalities) or a plurality of types, including but not limited to a text, an image, a video, a voice, and the like.

In a possible implementation, in a communication chat application, a text or a gesture of a user in a video sent by the user is recognized, and is matched with a predefined rule, so that a corresponding animation effect may be generated in a chat session, to improve fun of the user in communication and enhance expression of moods and emotions of the user. For example, a corresponding full-screen animation (such as a "cake" emoji rain) may be generated by recognizing a keyword (such as "happy birthday") in a chat text of the user. For another example, a corresponding screen animation effect (such as a "love heart", "fireworks", or a "like") may be generated by recognizing a specific gesture (such as a "heart gesture", a "peace sign", or a "thumb") of the user in a video chat. However, in this implementation, only simple recognition based on a specific keyword or gesture and simple special effect matching based on a predefined rule can be performed, and intelligent recognition and semantic understanding of a communication intent of the user are not supported. In addition, in this implementation, both communication parties depend on a specific application platform, and a network-wide and cross-platform service cannot be implemented.

Therefore, this application provides a communication method, a communication apparatus, a communication system, and a readable storage medium. In a call process of a user, a network side recognizes and understands a communication intent of the user, and provides corresponding intent service information for the user in a communication session of the user, to provide the user with a network-wide and cross-platform intent service independent of a specific application platform, thereby improving communication efficiency.

To better understand this application, the following first describes a communication system provided in this application and a possible application scenario. It may be understood that a system architecture and the application scenario described in embodiments of this application are intended to describe the technical solutions in embodiments of this application more clearly, and do not constitute a limitation on the technical solutions provided in embodiments of this application.

The communication system provided in embodiments of this application may be an enhancement of an existing communication system, may be obtained by adding some new network functions (network functions, NFs) to an existing communication system, or may be a new communication system. This is not limited in embodiments of this application. It may be understood that a network function (NF) in this application may be referred to as a network element, and the network function and the network element may be used interchangeably.

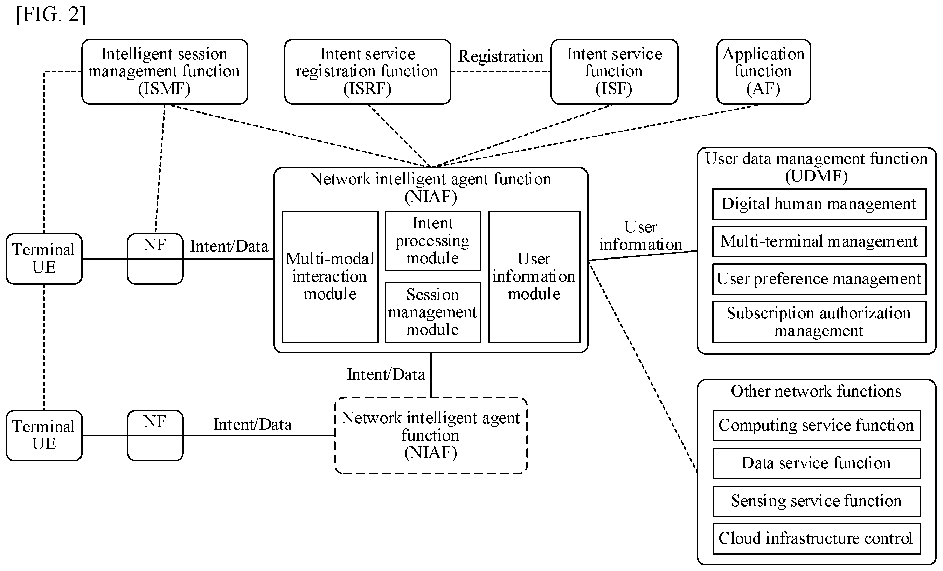

In a possible implementation, FIG. 2 is a simplified diagram of a communication system according to an embodiment of this application. As shown in FIG. 2, the communication system includes but is not limited to one or more of the following: a network intelligent agent function (network intelligent agent function, NIAF), an intelligent session management function (intelligent session management function, ISMF), an intent service registration function (intent service registration function, ISRF), an intent service function (intent service function, ISF), (intelligent) terminals, or a user data management function (user data management function, UDMF). For example, the communication system further includes one or more of the following: an application function (application function, AF), or other network elements (such as a computing service function, a data service function, a sensing service function, and cloud infrastructure control).

In a possible implementation, the network intelligent agent function (NIAF) may be configured to: receive communication content from a user terminal, and/or recognize a communication intent in the communication content. For example, the network intelligent agent function (NIAF) may be further configured to query for and/or invoke a related intent service function (ISF) to obtain intent service information. For example, the NIAF may further send the intent service information to one or more (intelligent) terminals associated with a user. For example, the NIAF may further interact with the other network elements (such as digital human management, subscription authorization management, and multi-terminal management), to provide more input parameters for the intent service function (ISF). For example, the NIAF may further process the obtained intent service information, so that the intent service information is adapted to a terminal capability, a terminal type, or the like of the user.

For example, the NIAF may be divided into one or more of the following parts: a user plane (such as a multi-modal interaction module), a control plane (such as a session management module), an intelligence plane (such as an intent processing module), or a data plane (such as a user information module). The user plane (such as the multi-modal interaction module) may be configured to: receive multi-modal interaction information from a user session, and/or preprocess the multi-modal interaction information. For example, the user plane (such as the multi-modal interaction module) may further output the intent service information to the user session in a multi-modal manner. The control plane (such as the session management module) may be configured to manage a session related to intent-based communication (or semantic communication). For example, the control plane (such as the session management module) may add the NIAF to or remove the NIAF from the user session, and/or may further add a transmission channel of the intent service information to the user session. The intelligence plane (such as the intent processing module) may be configured to recognize the communication intent of the user. For example, the intelligence plane (such as the intent processing module) may be configured to: parse the communication content in the user session, and perform intelligent recognition of the communication intent based on an AI capability, and/or may be configured to parse an intent request sent by the user terminal, to obtain the communication intent of the user. The data plane (such as the user information module) may be configured to obtain user-related information. For example, the data plane (such as the user information module) may obtain user-related subscription/location information, multi-terminal information, digital human information, or network context status information.

It may be understood that the foregoing module division of the NIAF is merely an example, in other words, the internal processing modules of the NIAF are merely examples, and an internal design of the NIAF is not limited in embodiments of this application.

In a possible implementation, the NIAF may be deployed as an independent network element (NF) (in a core network), or may be deployed together with another network element. For example, the NIAF may be used as a part of a user plane function (user plane function, UPF).

In a possible implementation, the intelligent session management function (ISMF) may be configured to establish (intelligent) sessions between various (intelligent) terminals and the network intelligent agent function (NIAF). For example, the ISMF may be deployed as an independent network element (NF) (in the core network), in other words, the ISMF may be a newly defined independent network element. Alternatively, the ISMF may be deployed together with another network element. For example, the ISMF may be an enhancement of an existing network element (such as a policy control function (policy control function, PCF), an access and mobility management function (access and mobility management function, AMF), and/or a session management function (session management function, SMF)).

In a possible implementation, the intent service function (ISF) may be understood as a service provided to achieve a specific communication intent (or user intent). The ISF may be configured to generate the intent service information. For example, an input to the ISF may include the communication intent recognized by the NIAF and/or the user-related information (such as the subscription/location information, the multi-terminal information, the digital human information, or the network context status information of the user), and an output of the ISF may include the intent service information. For example, the intent service information may be multi-modal, for example, in a plurality of modalities including a text, a voice, a video, an image, and/or haptics.

In a possible implementation, the intent service registration function (ISRF) may be configured to record a registered ISF in a network. For example, the ISRF may be further queried by the NIAF, and return corresponding ISF information. For example, the ISF information includes but is not limited to one or more of the following: an intent service capability, a connection method (or an access method), an invocation parameter (or an input parameter), an output format, or the like of the ISF. For example, the connection method/access method of the ISF may include but is not limited to a protocol (such as a hypertext transfer protocol (hypertext transfer protocol, HTTP)) used to access the ISF or a method of the protocol (such as a GET method of HTTP). The output format of the ISF may be understood as a format of an output parameter of the ISF, including but not limited to: a modality of the output parameter, such as a text/voice/video; a presentation format, such as 2D/3D/VR/AR; a resolution; and/or a type of the intent service information, and the like.

In a possible implementation, the terminal may be connected to the network, and may be configured to transfer intent-related data. For example, the terminal may further use the intent service function (ISF), and receive and display the intent service information. The terminal in embodiments of this application may include various intelligent terminals, such as a mobile phone, XR glasses, an internet of things terminal, an uncrewed aerial vehicle, a robot dog, and a robot. In a mobile communication network, the terminal is also referred to as user equipment (user equipment, UE). In other words, the "terminal" and the "UE" in this application may be used interchangeably. However, this application is not limited to the mobile communication network, and may also be applicable to another future or existing communication network, such as a wireless local area network (wireless local area network, WLAN) or a wireless personal area network (wireless personal area network, WPAN).

In a possible implementation, the user data management function (UDMF) may be configured to manage the user-related data, for example, including but not limited to one or more of the following: digital human information (such as a related identifier, an image, an identity role, or a service permission of a digital human) of the user, multi-terminal information (such as a type, a capability, or a location of the terminal) related to the user, a number (such as a subscriber identity module (subscriber identity module, SIM) number) of the user, service subscription information, a personal preference, or other personalized information. The data may be invoked by the NIAF to provide the ISF with input parameter information related to the intent service, and/or is used by the NIAF to process the intent service information output by the ISF. For example, information such as the digital human information, the multi-terminal information, the user preference, and service authorization may be managed by an independent submodule. As shown in FIG. 2, the UDMF includes one or more of the following (sub)modules: digital human management (for example, configured to manage the digital human information of the user), multi-terminal management (for example, configured to manage the multi-terminal information related to the user), user preference management (for example, configured to manage the personal preference and/or the other personalized information of the user), or subscription authorization management (for example, configured to manage the service authorization of the user). Certainly, these submodules may alternatively be deployed as independent network elements. It may be understood that the internal processing modules of the UDMF shown in FIG. 2 are merely examples, and an internal design of the UDMF is not limited in embodiments of this application.

In a possible implementation, the application function (AF) may be a third-party application server (application server) participating in the user session.

It may be understood that the names of the network elements and/or the (sub)modules shown in FIG. 2 are merely examples, and names of the network elements and/or the (sub)modules shown in FIG. 2 are not limited in this application. In addition, specific technologies and specific device forms used by the network elements and/or the (sub)modules shown in FIG. 2 are not limited in embodiments of this application.

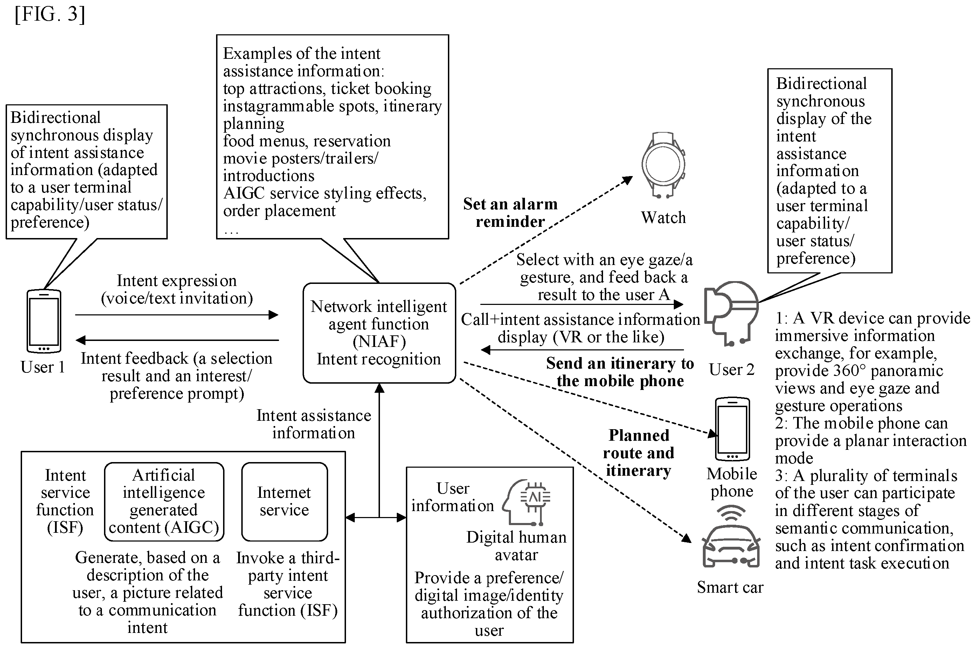

FIG. 3 is a diagram of a possible application scenario according to an embodiment of this application. As shown in FIG. 3, in a communication process, a user 1 sends an invitation to a user 2. A network intelligent agent function (NIAF) may analyze communication content of the user 1 by using an AI capability, to recognize a communication intent of the user 1, and query for and invoke a related intent service function (such as tourism, a movie, shopping, and meal booking) from a system (such as an ISRF) based on the communication intent. In this way, the NIAF may obtain intent service information (such as a tourist destination picture/video generated by using artificial intelligence generated content (artificial intelligence generated content, AIGC), clothing styling matching a digital human image of the user, and a movie poster matching preferences of both users) related to the communication intent of the user. The intent service information may be interactive (for example, the user 1 and the user 2 may select and/or confirm a movie poster, showtime, seats, and the like presented on terminals). The intent service information can help the users effectively convey intents and reach consensus. The NIAF may further drive, based on an intent consensus result, a plurality of terminals of the user to perform a corresponding intelligent task (such as setting a trip or an event reminder).

In this application, the "communication intent" of the user may be understood as an "objective/purpose" expected by the user. The "objective" may include an expected task (or some expected tasks) (which may be decomposed into a plurality of subtasks/sub-actions) or an expected state/result (for example, during man-machine communication, a machine may be indicated to reach a state, for example, an uncrewed aerial vehicle remains cruising at a height, and a low-latency and high-reliability dedicated network is established). The "intent service information" related to the "communication intent of the user" may be understood as related information that assists/supports the user in expressing/transferring/achieving the expected "objective/purpose".

The following details the technical solutions provided in this application.

To clearly describe the technical solutions in this application, this application is described by using a plurality of embodiments. For details, refer to descriptions of the following embodiments. In this application, unless otherwise specified, for same or similar parts of embodiments or implementations, refer to each other. In embodiments of this application and the implementations/implementation methods in embodiments, unless otherwise specified or if there is a logical conflict, terms and/or descriptions are consistent and may be mutually referenced between different embodiments and between the implementations/implementation methods in embodiments. Technical features in different embodiments and the implementations/implementation methods in embodiments may be combined to form a new embodiment, implementation, or implementation method based on an internal logical relationship of the technical features. The following implementations of this application are not intended to limit the protection scope of this application. It may be understood that a sequence of the following embodiments does not represent a degree of importance.

It should be understood that in this application, an indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be understood that in this application, that information C is used to determine information D includes that the information D is determined based only on the information C, and also includes that the information D is determined based on the information C and other information. In addition, that the information C is used to determine the information D may further include an indirect determining case. For example, the information D is determined based on information E, and the information E is determined based on the information C.

In addition, in embodiments of this application, that "a network element A sends information A to a network element B" may be understood as that a destination end of the information A or an intermediate network element in a transmission path between the network element A and a destination end is the network element B, and may include directly or indirectly sending the information to the network element B. That "the network element B receives the information A from the network element A" may be understood as that a source end of the information A or an intermediate network element in a transmission path from a source end is the network element A, and may include directly or indirectly receiving the information from the network element A. Information may undergo necessary processing such as a format change between a source end and a destination end for sending of the information. However, the destination end may understand valid information from the source end. Similar descriptions in this application may be understood similarly, and details are not described herein.

In a possible implementation, in this application, a first network element may be an NIAF, a second network element may be an ISF, a third network element may be an ISRF, and a fourth network element may be an ISMF. In this application, a media network element (media function, MF) may be configured to perform media forwarding and processing on communication content (which may be represented in a media form) of a user, for example, optimize, enhance, compress, and transcode media (such as an audio, a video, a text, and an image) that carries the communication content. For example, the media network element may be a unified media function (unified media function, UMF). It may be understood that descriptions of various network elements in this application herein are merely examples, and any network element that can implement the technical solutions of this application falls within the protection scope of this application.

The following first briefly describes an overall procedure of the technical solutions of this application.

In a possible implementation, in this application, a network intelligent agent function (NIAF) is introduced to a network, to recognize, in a communication process by using a native AI capability of the network and an intent service function (ISF) provided by a terminal or an external application, a communication intent/communication purpose expressed by a user, display, in a multi-modal/multi-terminal manner, intent service information related to the communication intent of the user, add the intent service information to a communication session of the user, and return the intent service information to the user, thereby helping both communication parties better understand communication intents of each other. In addition, bidirectional interaction may be further performed based on the intent service information, to obtain an intent consensus result, thereby driving execution of an intelligent task related to the intent consensus result.

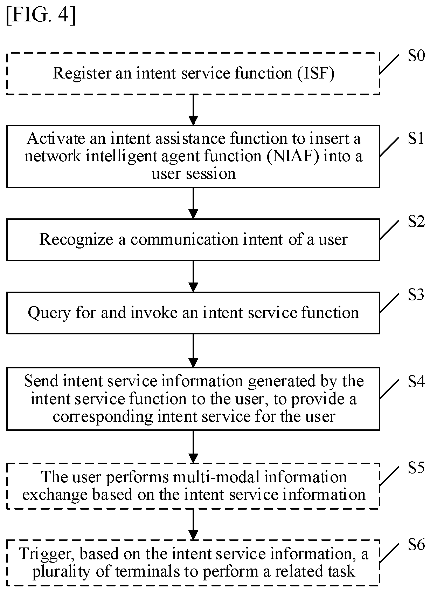

For example, FIG. 4 is a simplified schematic flowchart of a communication method according to an embodiment of this application. As shown in FIG. 4, the communication method may include but is not limited to step S1 to step S4. In a possible implementation, before step S1, the communication method shown in FIG. 4 may further include step S0. In a possible implementation, after step S4, the communication method shown in FIG. 4 may further include step S5 and/or step S6.

S0: Register an intent service function (ISF).

In a possible implementation, the intent service function (ISF) may be registered with an intent service registration function (ISRF), so that another network element discovers/queries for the intent service function (ISF) via the intent service registration function (ISRF), and/or uses a service provided by the intent service function (ISF). A registration procedure between the ISF and the ISRF is not limited in this application. For example, different intent service functions may provide different services. Certainly, a plurality of intent service functions may provide a same service. This is not limited in this application.

For example, registration information of the intent service function (or information registered by the intent service function (ISF) with the intent service registration function (ISRF)) may include one or more of the following: classification (such as a shopping category, a tourism category, a transportation category, an education category, and a catering category) of the intent service function, a keyword used to match and search for the intent service function, semantics used to search for the intent service function, a service capability of the intent service function (such as description information of an intent or a task processable by the intent service function, where the description information may be a description based on a natural language or a machine-readable formal language, such as an extensible markup language (Extensible Markup Language, XML), JSON (JavaScript Object Notation), or YAML (YAML Ain't a Markup Language)), an application programming interface (application programming interface, API) or a uniform resource locator (uniform resource locator, URL) of the intent service function, an output format (such as a picture, a video, or 360° panoramic information) of the intent service function, an invocation parameter (or an input parameter) of the intent service function, a multi-modal (such as a text, a voice, an image, or a touch) interaction capability of the intent service function, a multimedia parameter (such as encoding and decoding, a bandwidth, a delay, and another parameter) of the intent service function, or the like.

S1: Activate an intent assistance function to insert the network intelligent agent function (NIAF) into a user session.

In a possible implementation, a user side (such as a terminal of a user) or a network side (such as a user plane function (user plane function, UPF) or a media function (media function, MF)) activates the intent assistance function. The network side may add the network intelligent agent function (NIAF) to the user session, and may establish a multimedia session channel for transferring intent service information. "Inserting the NIAF into the user session" may be understood as follows: When receiving a session message from the terminal, the UPF or the MF may forward the session message to the NIAF.

S2: Recognize a communication intent of the user.

In a possible implementation, the network intelligent agent function (NIAF) may recognize the communication intent of the user based on one or more session messages (or communication content). For example, the network intelligent agent function may use an AI agent (AI Agent) function to recognize the one or more session messages (or the communication content) based on technologies such as text, voice, and semantic recognition and a large AI model, to determine the communication intent of the user.

It may be understood that the large AI model is also referred to as a foundation model (Foundation Model), and is a computer model. Through learning and training on a large amount of data, the large AI model can understand human language and semantics, and extract useful information from human language and semantics. The large AI model may include a plurality of sub-models, and may be classified into two types: a neural network model and a non-neural network model.

S3: Query for and invoke an intent service function.

In a possible implementation, the network intelligent agent function (NIAF) may query for and invoke the intent service function. For example, the NIAF may find, based on the recognized communication intent of the user, the intent service function matching the communication intent from a registered and/or native intent service (such as AIGC), and invoke the intent service function. The intent service function may generate related intent service information based on the communication intent, and return the intent service information to the NIAF.

S4: Send the intent service information generated by the intent service function to the user, to provide a corresponding intent service for the user.

In a possible implementation, the network intelligent agent function (NIAF) may send, to one or more terminals related to the user, the intent service information returned by the intent service function (ISF). For example, the NIAF may select, based on a capability or capabilities of the one or more terminals related to the user, an optimal multi-modal presentation form to send the intent service information to the user. For example, for VR glasses, content of the intent service information may be presented in a 360° panoramic manner; or for a mobile phone or a tablet computer, content of the intent service information may be presented in a planar manner. A presentation manner may include customizing and/or filtering the content of the intent service information based on digital human information (an identifier/digital image/preference) of the user.

In this application, similar descriptions such as "the terminal related to the user" or " the terminal corresponding to the user" may indicate a terminal associated with/bound to the identifier (such as a mobile phone number, a personal account, or an identity card number) of the user.

S5: The user performs multi-modal information exchange based on the intent service information.

In a possible implementation, if the intent service information is interactive, the user may perform an operation such as marking, selection, sorting, subscription, or confirmation on the terminal based on the content of the intent service information. The terminal may send operation information of the user for the intent service information to the network intelligent agent function (NIAF). The NIAF may synchronize an operation process (such as a sliding mouse trajectory, a finger touch point, or an eye focus) of the user and/or a result to another user in real time by using a multimedia stream. In this process, the NIAF may perform security authentication and/or authorization by using the digital human information (such as a digital identity) of the user.

S6: Trigger, based on the intent service information, the plurality of terminals to perform a related task.

In a possible implementation, the network intelligent agent function (NIAF) may drive, via the AI agent (AI Agent) function based on a confirmation result of the user in the intent service information, the plurality of terminals related to the user to perform a corresponding intelligent task. For example, the NIAF sends an instruction to the terminal related to the user to set a mobile phone schedule reminder, set a destination/route of a smart car, trigger a VR head-mounted display (namely, a head-mounted display (Head-mounted display, HMD)) to download and install software, or instruct an uncrewed aerial vehicle or a robot to go to a specified destination and capture and transmit back an image and a video.

In this embodiment of this application, the network side or the user side inserts the NIAF into the user session. The NIAF on the network side recognizes the communication intent in the communication content of the user, invokes the related intent service function to generate the intent service information related to the communication intent, and returns the intent service information to the user, to help both communication parties better understand intents conveyed by each other. In addition, because the NIAF and the ISF may be deployed in a core network, network-wide and cross-platform transfer of the communication intents can be implemented, assisting the users in quickly reaching intent consensus, thereby improving communication efficiency.

The following describes in detail the communication method provided in this application.

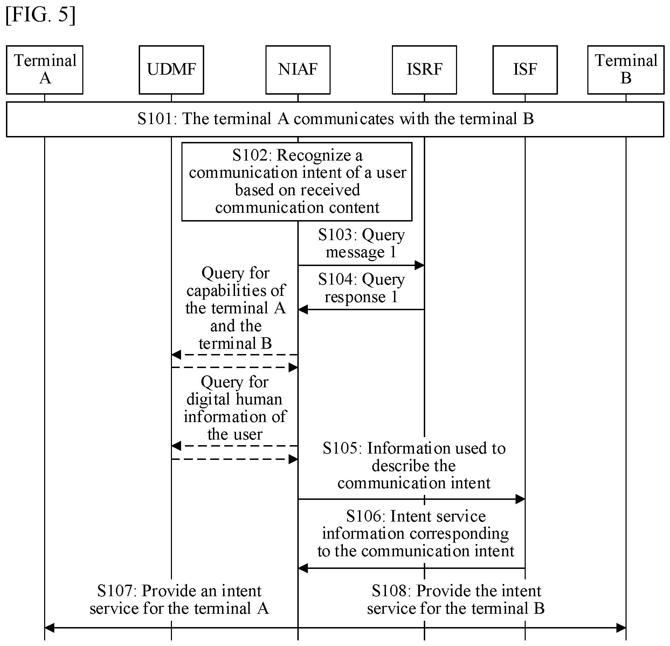

FIG. 5 is a first schematic flowchart of a communication method according to an embodiment of this application. In the method, an NIAF invokes an AIGC capability of an ISF to generate intent service information adapted to different terminal capabilities, and feeds back the intent service information to users, to provide an intent service for the users. As shown in FIG. 5, the communication method includes but is not limited to the following steps.

S101: A terminal A communicates with a terminal B.

In a possible implementation, a user 1 (user 1) and a user 2 (user 2) may establish a multimedia communication session (a multimedia call for short) such as a voice call, a video call, or a text chat via respective personal terminals (namely, the terminal A and the terminal B). An intent assistance function may be activated before or during the multimedia call, so that an NIAF on a network side can receive a session message forwarded by another network element (such as a UPF). For a specific implementation of activating the intent assistance function, refer to descriptions in the following embodiments. Details are not described herein. It may be understood that "activating the intent assistance function" in this application may be understood as "inserting the NIAF into a user session (such as the multimedia call established between the terminal A and the terminal B)", so that the NIAF on the network side can receive the user session message or user communication content forwarded by the another network element (such as the UPF).

In a possible implementation, the terminal A may send a session establishment request to a network in response to an operation (such as making the voice call or the video call) of the user 1. The session establishment request may include identifiers of both call parties (namely, the terminal A and the terminal B), a multimedia type, and a call parameter (such as a text, and an audio and video encoding and decoding parameter). The network may allocate an available resource based on the request of the terminal A, and return a session establishment response. The network establishes a multimedia call connection between the terminal A and the terminal B based on the request of the terminal A. After receiving the session establishment response, the terminal A may establish a communication connection to the network. After session establishment is completed, the terminal A may send a service activation request to the network, where the service activation request includes a service type (such as the intent assistance function) and a related parameter. The network configures a corresponding service function based on the request of the terminal A, adds the NIAF to the user session, and returns a service activation response. After service activation is completed, the user 1 and the user 2 may exchange multimedia data (including communication content) via the terminal A and the terminal B, and the NIAF may obtain the multimedia data (including the communication content), to recognize communication intents of the users, and provide corresponding intent service information based on the communication intents of the users.

In a possible implementation, the terminal A may carry, in a session message, communication content (such as information of a plurality of types/a plurality of modalities such as a text, an audio, a video, and a picture) input by the user 1, and send the session message to the terminal B. The terminal B may also carry, in a session message, communication content input by the user 2, and send the session message to the terminal A. The session message sent by the terminal A to the terminal B may be forwarded by a base station connected to the terminal A to a user plane function (denoted as a UPF-A, where details are not described below again) to which the terminal A belongs. The UPF-A may forward the session message to a user plane function (denoted as a UPF-B, where details are not described below again) to which the terminal B belongs. If the intent assistance function is activated, the UPF-A may further forward the session message to the NIAF, or the UPF-A extracts the communication content from the session message and sends the communication content to the NIAF. After receiving the session message forwarded by the UPF-A, the UPF-B sends the session message to the terminal B. Similarly, the session message sent by the terminal B to the terminal A may be forwarded by a base station connected to the terminal B to the UPF-B, the UPF-B forwards the session message to the UPF-A and/or the NIAF, and the UPF-A sends the received session message to the terminal A. Based on different network deployment situations, the UPF-A and the UPF-B may be a same entity. It may be understood that the session message may be further processed and forwarded by an application function (AF) between the UPF-A and the UPF-B. For example, when the UPF-B forwards the session message to the UPF-A, the session message may need to be processed and forwarded by the AF before arriving at the UPF-A.

It may be understood that if the intent assistance function is activated during the multimedia call, the UPF-A and/or the UPF-B may forward, to the NIAF, a historical session message or historical communication content that is exchanged between the terminal A and the terminal B during the multimedia call before the intent assistance function is activated, so that the NIAF can better recognize the communication intents of the users.

In a possible implementation, the communication content of the user 1 may include a communication intent of the user 1, such as inviting the user 2 to travel to a place, or purchasing clothes, a jewelry, or a game prop for the user 2. In another possible implementation, the terminal A may carry the communication intent of the user in the session message in an unstructured data form (for example, in a natural language or a text), or may carry the communication intent in a specific structured data form (for example, in a predefined intent message format). The communication intent of the user may be recognized by the terminal A by using communication content of the user, or may be explicitly expressed by the user. It may be understood that if the terminal A carries the communication intent of the user in the session message, after receiving the session message, the NIAF does not need to recognize the communication intent of the user, and instead, may directly query an ISRF for an ISF supporting the communication intent. In other words, if the terminal A carries the communication intent of the user in the session message, in the communication method in this embodiment of this application, step S103 may be performed without performing step S102.

S102: The NIAF recognizes a communication intent of a user based on received communication content.

In a possible implementation, during the multimedia call between the terminal A and the terminal B, the NIAF may perform intent recognition on the communication content in the one or more received session messages, or perform intent recognition on the received communication content, to obtain the communication intent of the user 1. The one or more session messages may include a session message (that is, context content of a user dialog) exchanged between the terminal A and the terminal B during the multimedia call within a period of time.

For example, the NIAF may recognize, by using a technology such as text, voice, and semantic recognition or a large AI model, the communication intent included in the communication content. The NIAF may further invoke an AI algorithm engine or an external resource or service (such as a web search or a semantic knowledge base) to further recognize the communication content, thereby enhancing accuracy of intent recognition.

For example, after obtaining the communication intent of the user 1, the NIAF may perform bidirectional communication with the user 1, to determine the communication intent of the user 1 more accurately. For example, the NIAF may communicate with the user 1 in an intelligent question and answer manner or by using a prompt (prompt) mechanism in the large AI model, to determine whether an intent recognition result is accurate. The NIAF may use the communication intent confirmed by the user 1 as a final intent recognition result. In other words, the NIAF may perform a subsequent operation based on the communication intent confirmed by the user 1, such as querying for an ISF supporting the communication intent in the following step S104.

The following describes, with reference to scenarios by using examples, the communication intent recognized by the NIAF. It may be understood that communication content in the following scenarios may be carried in a plurality of session messages. It may be further understood that the communication content in the following scenarios may be partial communication content exchanged between the terminal A and the terminal B during the multimedia call.

### Scenario 1: tourism and vacation

User 1: "Let's go to Erhai Lake for a honeymoon."

User 2: "What is the scenery of Erhai Lake? Is it suitable for taking wedding photos?"

User 1: "There are instagrammable spots like a, b, and c. The scenery is gorgeous for wedding photos. I'll have the intent assistant to send them to you."

The NIAF recognizes, based on the foregoing communication content, that a communication intent of the user 1 is to send wedding photo effect images at the scenic spots a, b, and c to the user 2.

### Scenario 2: shopping

User 1: "I saw a beautiful style-a garment online. How about I give it to you as a birthday gift?"

User 2: "I've been fat and changed my hairstyle recently. I'm afraid it's not suitable."

User 1: "Don't worry. I'll ask the intent assistant to send you the try-on effect. You need to authorize your digital human image."

The NIAF recognizes, based on the foregoing communication content, that a communication intent of the user 1 is to send the try-on effect of the style-a garment on the user 2 to the user 2.

### Scenario 3: education/communication

User 1: "What is Schrodinger's cat?"

User 2: "It's a kind of thought experiment in quantum mechanics about superposition collapse."

User 1: "I still don't understand. Can you explain it again?"

User 2: "I can't explain it clearly. I'll ask the intent assistant to explain it to you."

The NIAF recognizes, based on the foregoing communication content, that a communication intent of the user 2 is to clearly explain the thought experiment of "Schrodinger's cat" to the user 1 in a visualized manner.

### Scenario 4: real-scene navigation

User 1: "Hello, could you please tell me where your interview location a exactly is? I can't find it."

User 2: "Please wait. I'll ask the intent assistant to help you with real-scene navigation."

The NIAF recognizes, based on the foregoing communication content, that a communication intent of the user 2 is to help the user 1 find the destination a in a manner of real-scene navigation.

Scenario 5: The NIAF sends the recognized communication intent to the user for confirmation, or questions the user about an uncertain part of the communication intent and obtains an answer from the user.

For example, in the foregoing scenario 2, after the NIAF recognizes the communication intent of the user 1, the NIAF may further send a message to the terminal A, where the message carries the following content: Do you want to "send the try-on effect of the style-xx garment on the user B to the user B"?

The user 1 replies "Yes" via the terminal A. Then, the NIAF may perform a subsequent operation based on the communication intent confirmed by the user 1.

For another example, in the foregoing scenario 1, after the NIAF recognizes the communication intent of the user 1, the NIAF may further send a message to the terminal A, where the message carries the following content: Do you want a wedding photo effect of a "Chinese" style or a "Western" style?

The user 1 replies "Western" via the terminal A. Then, the NIAF may update the communication intent of the user 1 to "Send Western-style wedding photo effect images at the scenic spots a, b, and c to the user 2". The NIAF may perform a subsequent operation based on the updated communication intent.

S103: The NIAF sends a query message 1 to the ISRF, where the query message 1 is used to query for the ISF supporting the communication intent.

S104: The ISRF sends a query response 1 to the NIAF, where the query response 1 includes information about the ISF supporting the communication intent.

In a possible implementation, after determining the communication intent of the user, the NIAF may send the query message 1 to the ISRF, where the query message 1 may include information used to describe the communication intent, and the query message 1 may be used to query for the ISF supporting the communication intent. For example, the information used to describe the communication intent includes but is not limited to one or more of the following: a category of the communication intent, a topic of the communication intent, a keyword of the communication intent, semantics of the communication intent, or the like. The semantics of the communication intent may be semantics directly based on a text description, or may be semantics obtained through embedding (embedding) processing using a vectorization technology. For example, for the communication intent recognized in the foregoing scenario 1, a category of the communication intent may be "tourism", a topic of the communication intent may be "honeymoon and wedding photo", or the like, and a keyword may be "scenic spot a, scenic spot b, and scenic spot c", or the like. For the communication intent recognized in the foregoing scenario 2, a category of the communication intent may be "shopping", a topic of the communication intent may be "try-on effect", and a keyword of the communication intent may be "style a". For the communication intent recognized in the foregoing scenario 3, a category of the communication intent may be "education", a topic of the communication intent may be "Schrodinger's cat", and a keyword of the communication intent may be "quantum mechanics". For the communication intent recognized in the foregoing scenario 4, a category of the communication intent may be "traffic", a topic of the communication intent may be "real-scene navigation", and a keyword of the communication intent may be "location a". In the scenario 1, semantics of the communication intent may be a text "Send the wedding photo effect images at the scenic spots a, b, and c to the user 2" or a text (such as an English translation) whose semantics is the same as or similar to that of the text, or may be a string of numerical vectors (such as [-0.4685, 0.4572, 0.5159, -0.2618, - 0.6871, ...]) obtained by processing the text by using a machine semantic vectorization algorithm, which represents vector mapping of the text in high-dimensional semantic space.

After receiving the query message 1, the ISRF may query the registered ISF for the ISF supporting the communication intent. For example, the ISRF queries the registered ISF for an ISF matching the communication intent (for example, queries the registered ISF for an ISF whose service capability supports processing of the communication intent) or an ISF matching the category, the topic, the keyword, and/or the semantics of the communication intent, or uses a combination of several query manners. When the semantic matching manner is used, query matching may be performed based on a vectorized semantic correlation. In this case, the ISRF may be used as a vector database to store vectorized ISF registration information (when the ISF is registered, vectorization processing is performed on original registration information of the ISF, and a processed registration information vector and the original registration information are stored in association with each other), and may perform similarity calculation based on a semantic vector of the communication intent and the registration information vector of the ISF in the ISRF, to return information about one or more ISFs with high similarities (such as top K similarities, or similarities greater than a threshold). If the ISRF finds that the registered ISF includes an ISF supporting the communication intent (for example, the registered ISF includes an ISF matching the category, the topic, the keyword, or the semantics of the communication intent), the ISRF may send the query response 1 to the NIAF, where the query response 1 may include the information about the one or more ISFs supporting the communication intent. For example, in the foregoing scenario 1 and scenario 2, a tourism ISF and a shopping ISF may be respectively obtained through query, and each of the two (namely, the tourism ISF and the shopping ISF) may provide an AIGC function, to generate corresponding intent service information based on the communication intent of the user. For example, if the ISRF finds that a plurality of ISFs support the communication intent, the ISRF may return information about the plurality of ISFs to the NIAF, or may select (arbitrarily or based on an internal policy (such as load balancing) of the ISRF) a part of ISFs (one or more ISFs, which is not limited in embodiments of this application), and return information about this part of ISFs to the NIAF by using the query response 1. Alternatively, the ISRF returns, to the NIAF, information about a 1st ISF that is found and that supports the communication intent. The information about the ISF in the query response 1 may include but is not limited to one or more of the following: an access address of the ISF (such as an API, a URL, or a MAC address of the ISF), an identifier of the ISF, or a name of the ISF. It may be understood that the information about the ISF may be used to determine the ISF.

If the ISRF finds that the registered ISF includes no ISF supporting the communication intent (for example, the registered ISF includes no ISF matching the category of the communication intent), the ISRF may send a query failure message to the NIAF. The query failure message may include a cause of a query failure (for example, no ISF supporting the communication intent can be found). After receiving the query failure message, the NIAF may send a query message to another ISRF to query for the ISF supporting the communication intent. Alternatively, after receiving the query failure message, the NIAF may feed back, to a terminal (such as the terminal A) related to the user, that an intent service corresponding to the communication intent is not supported.

In a possible implementation, the query message 1 may further include a type/capability of the terminal A and/or a type/capability of the terminal B. The ISRF may select an ISF whose output format matches the type/capability of the terminal A and/or the type/capability terminal B from the found ISF supporting the communication intent, and return information about the selected ISF to the NIAF by using the query response 1. For example, the types/capabilities of the terminal A and the terminal B may be understood as information display modes supported by the terminal A and the terminal B. For example, the terminal A is a mobile phone, and the information display mode supported by the terminal A is two-dimensional planar display. For example, the terminal B is a VR head-mounted display, and the information display mode supported by the terminal B is 360° panoramic display and three-dimensional display. For example, the output format of the ISF may include but is not limited to a planar picture, a three-dimensional picture, a two-dimensional (2 Dimensions, 2D) video, a three-dimensional (3 Dimensions, 3D) video, 360° panoramic information, or the like.

In a possible implementation, the NIAF may access a local database to query for the capabilities/types of the terminal A and the terminal B. Alternatively, the NIAF may query a UDMF for the capabilities/types of the terminal A and the terminal B. Alternatively, the NIAF may first query a local database for the capabilities/types of the terminal A and the terminal B, and if the local database does not store the capabilities/types of the terminal A and the terminal B, query a UDMF for the capabilities/types of the terminal A and the terminal B. For example, the NIAF may send a query message 2 to the UDMF, where the query message 2 may include the identifiers (such as IDs or MAC addresses) of the terminal A and the terminal B, and the query message 2 may be used to query for the capabilities/types of the terminal A and the terminal B. After receiving the query message 2, the UDMF may locally query for the capabilities/types of the terminal A and the terminal B, and may return a query response 2 to the NIAF, where the query response 2 includes the found capabilities/types of the terminal A and the terminal B. For example, the query response 2 may further include one or more of the following: current load of the terminal A, an operating mode of the terminal A, current load of the terminal B, or an operating mode of the terminal B. It may be understood that based on a difference in network subscription affiliation, query for the capabilities/types of the terminal A and the terminal B may require interaction and negotiation between NIAFs to which the terminal A and the terminal B belong respectively. For example, when the NIAF (denoted as an NIAF-A) to which the terminal A belongs needs to obtain the capability/type of the terminal B, the NIAF-A may send an intent request to the NIAF (denoted as an NIAF-B) to which the terminal B belongs, where the intent request may include the identifier of the terminal B, and the intent request may be used to obtain the capability/type of the terminal B. The intent request may be sent in a natural language text-based manner, a large model prompt-based manner, or a service-based (service-based) interface manner. The NIAF-B may obtain the capability/type of the terminal B from a UDMF (denoted as a UDMF-B) in a home network of the terminal B, and return the capability/type of the terminal B to the NAIF-A. Between the NIAF-A and the NIAF-B, messages may be routed based on a network preconfiguration, or may be forwarded based on addresses, domain names, and the like of the NIAF-A and the NIAF-B.

In a possible implementation, the query response 1 may further include one or more of the following: an invocation parameter (or an input parameter) of the ISF, the output format of the ISF, a service capability of the ISF, subscription and/or permission information of the ISF, capability or status information of the ISF, an access method of the ISF, or a network resource requirement of the ISF. The invocation parameter (or the input parameter) of the ISF may include a necessary parameter required by the ISF for generating intent service information, such as the communication intent or the information used to describe the communication intent. For example, the invocation parameter (or the input parameter) of the ISF may further include one or more of the following: digital human information of the user, personalized information of the user, or geographical location information (such as a longitude and a latitude, or a global positioning system (global positioning system, GPS) location) of the user. The subscription and/or permission information of the ISF may include subscription information of the ISF with the user 1 and the user 2, permission information of the user 1 and the user 2 in the ISF, level-related condition information for the user 1 and the user 2, service tariff information of the ISF, and the like. The capability information of the ISF may include a matching degree/an association degree (represented by a percentage, a score, a level, or the like) with the communication intent. The status information of the ISF may include current load of the ISF. The network resource requirement of the ISF may include computing power, a bandwidth, a delay, or the like of the ISF. The access method of the ISF may include a protocol (such as HTTP) used to access the ISF, and/or a method of the protocol (such as a GET method of HTTP).

In a possible implementation, if the query response 1 includes the invocation parameter of the ISF, after receiving the query response 1, the NIAF may obtain, based on the invocation parameter of the ISF, a value corresponding to the invocation parameter. The "value" herein is not necessarily a numerical value, and represents content of the invocation parameter. For example, the invocation parameter of the ISF includes the digital human information, and the NIAF may query the UDMF for digital human information of the user 1 and/or the user 2. For example, the NIAF may send a query message 3 to the UDMF, where the query message 3 may include identification information (such as an international mobile subscriber identity (international mobile subscriber identity, IMSI)) of the user 1 and/or the user 2. The query message 3 may be used to query for the digital human information of the user. After receiving the query message 3, the UDMF may locally query for the digital human information of the user 1 and/or the user 2, and may return a query response 3 to the NIAF, where the query response 3 may include the digital human information of the user 1 and/or the user 2. It may be understood that based on the difference in network subscription affiliation, query for the digital human information may require interaction and negotiation between the NIAFs to which the terminal A and the terminal B belong respectively. For details, refer to the foregoing query for the capabilities/types of the terminal A and the terminal B. Details are not described herein.

The digital human information may include but is not limited to one or more of the following: a digital human identifier, a digital human image, digital identity authorization information, or the like. For example, in the foregoing scenario 1, the NIAF separately obtains digital human images (which may be used to generate the wedding photo effect images) of the user 1 and the user 2 via the UDMF. In the foregoing scenario 2, the NIAF obtains a digital human image (which may be used to generate a try-on effect image) of the user 2 via the UDMF.

It may be understood that if the digital human information includes the digital identity authorization information, a process in which the NIAF obtains the digital human information of the user further includes an authorization interaction process with the user. In the authorization interaction process, the NIAF or the UDMF may interact with the user to obtain digital identity authorization of the user. For example, an authorization interaction process with the user 1 is used as an example. The NIAF or the UDMF may send a digital identity authorization request to the terminal A, where the digital identity authorization request may be used to request to obtain authorization of the user 1. After receiving the digital identity authorization request, the terminal A may output and display the digital identity authorization request. The user 1 may perform an operation on the terminal A to confirm whether to perform authorization. If the user 1 confirms authorization, the terminal A may generate digital identity authorization (such as an authorization token (token)), and return the digital identity authorization to the NIAF or the UDMF. An authorization interaction process with the user 2 is the same as the authorization interaction process with the user 1, and details are not described herein.

For example, the invocation parameter of the ISF includes location information (such as a longitude and a latitude, or GPS location) of the terminal, and the NIAF may obtain location information of the terminal A and/or location information of the terminal B from the terminal A and/or the terminal B. For example, an example in which the NIAF obtains the location information of the terminal A is used. The NIAF may send a location obtaining request to the terminal A. After receiving the location obtaining request, the terminal A may perform positioning (for example, enable a GPS) to obtain a geographical location of the terminal A, and may return geographical location information of the terminal A to the NIAF. Alternatively, the NIAF may directly obtain the location information of the terminal A by using a location service function in a home network of the terminal A. A manner in which the NIAF obtains the location information of the B is the same as the manner in which the NIAF obtains the location information of the terminal A. Details are not described herein. For example, in the foregoing scenario 4, the NIAF obtains the location information of the terminal A via the terminal A (the location information may be used for real-scene navigation).

In another possible implementation, after obtaining the communication intent (for example, after step S103), the NIAF may send the communication intent to the large AI model, and the large AI model analyzes the communication intent to obtain an invocation parameter (or an input parameter) required for generating intent service information, and transmits the invocation parameter (or the input parameter) to the NIAF. For example, in the foregoing scenario 1, after analyzing the communication intent of the user 1, the large AI model can learn that the invocation parameter includes digital human images of the user 1 and the user 2. For another example, in the foregoing scenario 2, after analyzing the communication intent of the user 1, the large AI model can learn that the invocation parameter includes a digital human image of the user 2. For another example, in the foregoing scenario 4, after analyzing the communication intent of the user 2, the large AI model can learn that the invocation parameter includes location information of the user 1. Then, the NIAF may obtain a value corresponding to the invocation parameter. For details, refer to the foregoing descriptions. Details are not described herein.

In a possible implementation, the ISF may alternatively be deployed inside the NIAF as a built-in function of the NIAF. In this case, after determining the communication intent of the user, the NIAF does not need to query for the ISF supporting the communication intent, and the NIAF may directly determine the ISF supporting the communication intent. The NIAF may further obtain an invocation parameter of the ISF supporting the communication intent, and may obtain, based on the invocation parameter of the ISF, a value corresponding to the invocation parameter. For details, refer to the foregoing descriptions. Details are not described herein.

S105: The NIAF sends, to the found ISF, the information used to describe the communication intent.

S106: The ISF sends, to the NIAF, intent service information corresponding to the communication intent.

In a possible implementation, the NIAF invokes the found ISF, and provides the invocation parameter (such as the information used to describe the communication intent, the digital human image, or the location information of the terminal) required for generating the intent service information. For example, the NIAF may send a message A to the found ISF, where the message A may include the information used to describe the communication intent, and the message A may be used to invoke the ISF to generate the intent service information corresponding to the communication intent.

In a possible implementation, before the NIAF invokes the found ISF, the NIAF may further access another external service or resource (such as the web search, a website, or the semantic knowledge base), to obtain more invocation parameter information (such as semantics similar to the invocation parameter of the ISF, or a multimedia material associated with the invocation parameter of the ISF). For example, in the foregoing scenario 3, if the invocation parameter of the ISF includes the keyword "Schrodinger's cat" of the communication intent, semantics similar to the invocation parameter "Schrodinger's cat" may be "quantum superposition thought experiment", and a multimedia material associated with the invocation parameter "Schrodinger's cat" may be "a photo of Schrodinger", "a cat picture", "a theoretical formula of Schrodinger", or the like.

In a possible implementation, if the query response 1 includes information about a plurality of ISFs, the NIAF may select one of the plurality of ISFs, and send the message A to the ISF, where the message A may include the information used to describe the communication intent, and the message A may be used to invoke the ISF to generate the intent service information associated with the communication intent. For example, the NIAF may select one of the plurality of ISFs based on output formats, subscription and/or permission information, capability or status information, or network resource requirements of the plurality of ISFs. For example, the NIAF may select an ISF whose capability information has a highest matching degree with the communication intent, select an ISF whose output format has a highest matching degree with a terminal capability, select an ISF whose output format has a highest matching degree with a secondary processing capability of the NIAF, select an ISF with lowest current load, select an ISF with a highest satisfaction degree of an invocation parameter requirement, select an ISF with lowest service tariff, or select an ISF based on another policy/condition.

In a possible implementation, after receiving the message A, the ISF may generate, based on the message A, the intent service information associated with the communication intent, and may send a message B to the NIAF, where the message B includes the intent service information associated with the communication intent. For example, in addition to the information used to describe the communication intent, the message A may further include content of another invocation parameter. For example, in the foregoing scenario 1, the message A further includes the digital human images of the user 1 and the user 2; in the foregoing scenario 2, the message A further includes the digital human image of the user 2; and in the foregoing scenario 4, the message A further includes the location information of the user 1. It may be understood that the ISF may provide an AIGC capability, and can generate corresponding intent service information based on an input communication intent. For example, in the scenario 1, the tourism ISF may generate, based on the communication intent of the user 1 and the digital human images of the user 1 and the user 2, virtual wedding photos or short videos of digital humans of the user 1 and the user 2 at the scenic spots a, b, and c in Erhai Lake (that is, intent service information). In the scenario 2, the shopping ISF may generate, based on the communication intent of the user 1, the digital human image of the user 2 and the style-a garment recommended by the user 1, the try-on effect of the style-a garment on the digital human of the user 2 (that is, intent service information).

To better understand a process in which the ISF generates the intent service information, the following describes, with reference to scenarios, how to perform task/action decomposition in the process of generating the intent service information.

Scenario 1: The communication intent of the user 1 is to send the wedding photo effect images at the scenic spot a, b, and c to the user 2.

### Task decomposition

Subtask 1/Sub-action 1: Search for/Obtain scenic images of the scenic spots a, b, and c, such as images related to wedding photos.

Subtask 2/Sub-action 2: Obtain the digital human images of the user 1 and the user 2.

Subtask 3/Sub-action 3: Generate the wedding photo effect images of the digital humans of the user 1 and the user 2 at the scenic spots a, b, and c.

Subtask 4/Sub-action 4: Send the wedding photos to the user 2.

In the scenario 1, the ISF may first search for/obtain the scenic images of the scenic spots a, b, and c, such as the images related to wedding photos. If the message A includes the digital human images of the user 1 and the user 2, the ISF may obtain the digital human images of the user 1 and the user 2 from the message A. If the message A does not include the digital human images of the user 1 and the user 2, the ISF may obtain the digital human images of the user 1 and the user 2 from the NIAF or the UDMF. For example, the ISF may send a parameter obtaining message to the NIAF, where the parameter obtaining message is used to obtain the digital human images of the user 1 and the user 2. After receiving the parameter obtaining message, the NIAF may query the UDMF for the digital human images of the user 1 and the user 2. For a specific query manner, refer to the foregoing descriptions. Details are not described herein. After finding the digital human images of the user 1 and the user 2, the NIAF sends the digital human images of the user 1 and the user 2 to the ISF. Certainly, the ISF may alternatively query the UDMF for the digital human images of the user 1 and the user 2. A query manner is the same as the manner in which the NIAF queries the UDMF for the digital human images of the user 1 and the user 2. Details are not described herein again. After obtaining the digital human images of the user 1 and the user 2, the ISF may generate, by using an AIGC technology, the wedding photo effect images of the digital humans of the user 1 and the user 2 at the scenic spots a, b, and c, that is, the intent service information. The ISF may send the intent service information, that is, the wedding photo effect images of the digital humans of the user 1 and the user 2 at the scenic spots a, b, and c, to the NIAF by using the message B. The NIAF sends the intent service information (such as the wedding photo effect images) to the user 2.

Scenario 2: The communication intent of the user 1 is to send the try-on effect of the style-a garment on the user 2 to the user 2.

### Task decomposition

Subtask 1/Sub-action 1: Search for/Obtain a digital model of the style-a garment.

Subtask 2/Sub-action 2: Obtain the digital human image of the user 2.

Subtask 3/Sub-action 3: Synthesize a digital human image wearing the style-a garment.

Subtask 4/Sub-action 4: Send the synthesized digital human image to the user 2.

In the scenario 2, the ISF may first search for/obtain the digital model of the style-a garment. If the message A includes the digital human image of the user 2, the ISF may obtain the digital human image of the user 2 from the message A. If the message A does not include the digital human image of the user 2, the ISF may obtain the digital human image of the user 2 from the NIAF or the UDMF. For a specific obtaining manner, refer to the foregoing descriptions. Details are not described herein. Then, the ISF may generate/synthesize, by using an AIGC technology, the digital human image of the user 2 wearing the style-a garment, that is, the intent service information. The ISF may send the intent service information, that is, the digital human image of the user 2 wearing the style-a garment, to the NIAF by using the message B. The NIAF sends the intent service information (such as the digital human image of the user 2 wearing the style-a garment) to the user 2.

Scenario 3: The communication intent of the user 2 is to clearly explain the thought experiment of "Schrodinger's cat" to the user 1 in a visualized manner.

Subtask 1/Sub-action 1: Obtain related information of "Schrodinger's cat", including a plurality of types of visualized data such as an image and a video.

Subtask 2/Sub-action 2: Send the related information to the user 1.

Subtask 3/Sub-action 3: Receive a question from the user 1, and answer the related question.

The subtasks 1 to 3 are performed cyclically until the user 1 understands or ends/deactivates the intent assistance function.

In the scenario 3, the ISF first obtains the related information of "Schrodinger's cat", and sends the related information (that is, intent service information) to the terminal A of the user 1. The user 1 may ask the question via the terminal A. The ISF receives a question message from the terminal A, and answers the related question of the user 1. The foregoing process is performed cyclically until the user 1 understands the thought experiment of "Schrodinger's cat" or ends/deactivates the intent assistance function.

Scenario 4: The communication intent of the user 2 is to help the user 1 find the destination a in the manner of real-scene navigation.

Subtask 1/Sub-action 1: Obtain a location p of the user 1.

Subtask 2/Sub-action 2: Obtain a real-scene photo around the location p.

Subtask 3/Sub-action 3: Overlay a navigation route indication on the real-scene photo.

Subtask 4/Sub-action 4: Send a real-scene photo overlaid with a navigation route to the user 1.

The subtasks 1 to 4 are performed repeatedly until the user 1 arrives at the destination a or ends/deactivates the intent assistance function.

In the scenario 4, if the message A includes the location information of the terminal A (the user 1), the ISF may obtain the location information of the user 1 from the message A. If the message A does not include the location information of the terminal A (the user 1), the ISF may obtain the location information of the user 1 from the NIAF or the terminal A. For example, the ISF may send a parameter obtaining message to the NIAF, where the parameter obtaining message is used to obtain the location information of the user 1. After receiving the parameter obtaining message, the NIAF may obtain the location information of the user 1 from the terminal A of the user 1. For a specific obtaining manner, refer to the foregoing descriptions. Details are not described herein. After obtaining the location information of the terminal A, the NIAF sends the location information of the terminal A to the ISF. The location information of the terminal A is the location information of the user 1. Certainly, the ISF may alternatively obtain the location information of the user 1 from the terminal A. An obtaining manner is the same as a manner in which the NIAF obtains the location information from the terminal A. Details are not described herein again. Then, the ISF obtains the real-scene photo around the location information of the user 1, overlays the navigation route indication on the real-scene photo, and sends the real-scene photo overlaid with the navigation route (that is, intent service information) to the NIAF by using the message B. The NIAF sends the intent service information (such as the real-scene photo overlaid with the navigation route) to the user 1. This process is repeated until the user 1 arrives at the destination a or ends/deactivates the intent assistance function.

In a possible implementation, the message A may further include the capabilities/types of the terminal A and the terminal B. In other words, the NIAF may request intent service information suitable for different terminal capabilities from the ISF. Therefore, after the ISF generates the intent service information, if a presentation form/presentation form of the intent service information is not adapted to the capability/type of the terminal A, the ISF may adjust the presentation form/presentation form of the intent service information to be adapted to the capability/type of the terminal A, to obtain intent service information a. Similarly, if the presentation form/presentation form of the intent service information is not adapted to the capability/type of the terminal B, the presentation form/presentation form of the intent service information may be adjusted to be adapted to the capability/type of the terminal B, to obtain intent service information b. Content of the intent service information, content of the intent service information a, and content of the intent service information b are the same. Display or presentation forms of the intent service information, the intent service information a, and the intent service information b may be the same, or may be different. The ISF may carry the intent service information a and the intent service information b in the message B, and return the message B to the NIAF.

It may be understood that if the query message 1 includes the capability/type of the terminal A and/or the capability/type of the terminal B, the message A may not include the capabilities/types of the terminal A and the terminal B.

In a possible implementation, the message A may further include one or more of the following: the current load of the terminal A, the operating mode of the terminal A, the current load of the terminal B, or the operating mode of the terminal B. In this case, after generating the intent service information, the ISF may perform adaptation conversion on the intent service information based on the current load/operating mode of the terminal. For example, it is assumed that a presentation form of the intent service information generated by the ISF is a 3D image, and an information display capability of the terminal A includes a 2D image and a 3D image. If the current load of the terminal A is heavy or the operating mode of the terminal A is a 2D model, the ISF may convert the intent service information (such as the 3D image) into a 2D image; or if the current load of the terminal A is light or the operating mode of the terminal A is a 3D model, the ISF may not change the presentation form/presentation form of the intent service information.

S107: The NIAF provides an intent service for the terminal A.

S108: The NIAF provides the intent service for the terminal B.

In a possible implementation, an execution sequence of step S107 and step S108 is not limited in this embodiment of this application. For example, step S107 may be performed before step S108, may be performed after step S108, or may be performed simultaneously/in parallel with step S108.

In a possible implementation, after obtaining the intent service information associated with the communication intent, the NIAF may separately provide the intent service for the terminal A and the terminal B, for example, separately send the intent service information to the terminal A and the terminal B. It may be understood that the NIAF may alternatively provide the intent service only for the terminal A or the terminal B. This is not limited in embodiments of this application.

In a possible implementation, after obtaining the intent service information, the NIAF may perform adaptation conversion on the intent service information based on terminal capabilities of the user 1 and the user 2. For example, if the presentation form of the intent service information is not adapted to the capability of the terminal A, the NIAF may convert the presentation form of the intent service information into a presentation form adapted to the capability of the terminal A, and send the intent service information in the converted presentation form to the terminal A. Similarly, if the presentation form of the intent service information is not adapted to the capability of the terminal B, the NIAF may convert the presentation form of the intent service information into a presentation form adapted to the capability of the terminal B, and send the intent service information in the converted presentation form to the terminal B. For example, if the intent service information returned by the ISF is a 2D planar picture/video, and is adapted only to the capability of the terminal A (such as the mobile phone) but not to the capability of the terminal B (such as the VR head-mounted display), the NIAF may convert the intent service information into 360° panoramic 3D multimedia information based on the capability of the terminal B (such as the VR head-mounted display), to be adapted to immersive viewing by the user 2 via the VR head-mounted display. If the intent service information returned by the ISF is 360° panoramic 3D multimedia information, and is adapted only to the capability of the terminal B (such as the VR head-mounted display) but not to the capability of the terminal A (such as the mobile phone), the NIAF may convert the intent service information into a 2D planar picture/video based on the capability of the terminal A (such as the mobile phone), to be adapted to viewing by the user 1 via the mobile phone. The NIAF may alternatively perform adaptation conversion on the intent service information based on load or operating modes of the terminals of the user 1 and the user 2. For example, it is assumed that the presentation form of the intent service information returned by the ISF to the NIAF is a 3D image, and the information display capability of the terminal A includes a 2D image and a 3D image. If the current load of the terminal A is heavy or the operating mode of the terminal A is a 2D model, the NIAF may convert the intent service information (such as the 3D image) into a 2D image, and then send the 2D image to the terminal A; or if the current load of the terminal A is light or the operating mode of the terminal A is a 3D model, the NIAF may send the intent service information to the terminal A without changing the presentation form/presentation form of the intent service information.

In a possible implementation, the NIAF may send the intent service information to the UPF, and the UPF sends the intent service information to the terminal A and/or the terminal B in a piggyback manner. For example, the NIAF may send, to the UPF-A, intent service information whose presentation form is adapted to the capability of the terminal A. After receiving the intent service information, the UPF-A may insert the intent service information into a user plane message to be sent to the terminal A in a piggyback manner. Similarly, the NIAF may send, to the UPF-A, intent service information whose presentation form is adapted to the capability of the terminal B. After receiving the intent service information, the UPF-A may insert the intent service information into a user plane message to be sent to the terminal B in a piggyback manner. Alternatively, the UPF-A forwards the intent service information to the UPF-B, and the UPF-B inserts the intent service information into a user plane message to be sent to the terminal B in a piggyback manner. It may be understood that in this implementation, a payload (payload) format of the user plane message may need to be extended to include both original user session information and intent service information related to the original user session information. In other words, the intent service information may be in a payload part of the user plane message.

In another possible implementation, before step S107 and step S108, for example, in a multimedia communication session establishment process, or after obtaining of the intent service information by the NIAF but before step S107 and step S108, the NIAF may establish a specific media channel with the terminal A and/or the terminal B. For ease of description, the specific media channel is referred to as an intent service media channel below. The NIAF may transmit the intent service information to the terminal A and/or the terminal B through the intent service media channel. For example, a channel for transmitting the intent service information may be established between the NIAF and the terminal A and/or the terminal B in two manners: pull (Pull) and push (Push).

In the pull (Pull) manner, the terminal A and the terminal B may send requests to a specific address (that is, an address used to obtain the intent service information) of the NIAF or the ISF, to obtain the intent service information. The following uses the address of the NIAF as an example. The address may be sent by the NIAF to the terminal A and the terminal B in advance. A sending manner may be sending by using an independent message, or may be sending by using an existing message (such as a short message, an RCS (that is, rich communication service (rich communication service)) message, or a 5G message). This is not limited in embodiments of this application. The address may be in a form of a uniform resource locator (uniform resource locator, URL). An address sent by the NIAF to the terminal A and an address sent by the NIAF to the terminal B may be the same, or may be different (for example, for adaptation to different terminal capabilities, the intent service information is displayed in different forms and stored at different locations). For example, the address sent by the NIAF to the terminal A is http://niaf.example.com/intent_assistant_info/ue_a, and the address sent by the NIAF to the terminal B is moq://niaf.example.com/intent_assistant_info/ue_b. After receiving the address used to obtain the intent service information (such as the address of the NIAF), the terminal A may send a message C to the NIAF by using the address as a destination address, where the message C is used to obtain the intent service information. After receiving the message C, the NIAF sends the intent service information to the terminal A by using a response message to the message C. Similarly, after receiving the address used to obtain the intent service information (such as the address of the NIAF), the terminal B may send a message D to the NIAF by using the address as a destination address, where the message D is used to obtain the intent service information. After receiving the message D, the NIAF sends the intent service information to the terminal B by using a response message to the message D. For example, the message C and the message D may be HTTP GET messages or media over quick user datagram protocol (user datagram protocol, UDP) internet connection (quick UDP internet connection, QUIC) subscription request (MoQ SUBSCRIBE REQUEST) messages. In this case, the channel for transmitting the intent service information is a media channel including request messages and response messages between the terminal A and the NIAF (or the ISF) and between the terminal B and the NIAF (or the ISF).

In the push (Push) manner, the NIAF (or the ISF) may send the intent service information to the terminal A and/or the terminal B in a message push manner, for example, send the intent service information to the terminal A and/or the terminal B by using a short message, an RCS (Rich Communication Service) message, or a 5G message. Alternatively, the NAIF (or the ISF) sends a new multimedia session request (such as a session initiation protocol (session initiation protocol, SIP) invite (SIP INVITE) message) to the terminal A and/or the terminal B, and negotiates, by using the multimedia session request, to establish a multimedia streaming transmission session (such as a real-time transport protocol (real-time transport protocol, RTP) session). After receiving the multimedia session request, the terminal A and/or the terminal B may separately send a multimedia session response to the NIAF, to establish the multimedia streaming transmission session. Then, the NIAF may send the intent service information to the terminal A and/or the terminal B by using the established multimedia streaming transmission session. In this case, the channel for transmitting the intent service information is a media channel including messages pushed by the NIAF (or the ISF) to the terminal A and/or the terminal B or a newly established multimedia session.

It may be understood that the intent service information sent by the NIAF to the terminal A may be adapted to the capability of the terminal A, and the intent service information sent by the NIAF to the terminal B may be adapted to the capability of the terminal B.

In a possible implementation, after receiving the intent service information, the terminal A and the terminal B may output and display the intent service information. There are a plurality of display modes, such as display by using an independent multimedia object (such as a separate window or an AR-overlaid virtual object), or display on a virtual environment/background of the call. Therefore, the user 1 and the user 2 can quickly understand intents of each other based on the visualized intent service information, and reach consensus on a travel plan, a shopping plan, or the like.

In this embodiment of this application, the NIAF combines a context of a communication session of the user in a call process of the user, recognizes a communication intent of the user, and invokes a corresponding ISF. The ISF dynamically generates intent service information based on the AIGC technology, and sends the intent service information to the user, to provide an intent service for the user in the call process of the user. In addition, because the NIAF and the ISF may be deployed in a core network, a network-wide and cross-platform intent service can be implemented, improving communication efficiency. In addition, in this embodiment of this application, the intent service information is adapted to the terminal capability, so that a best display effect can be obtained.

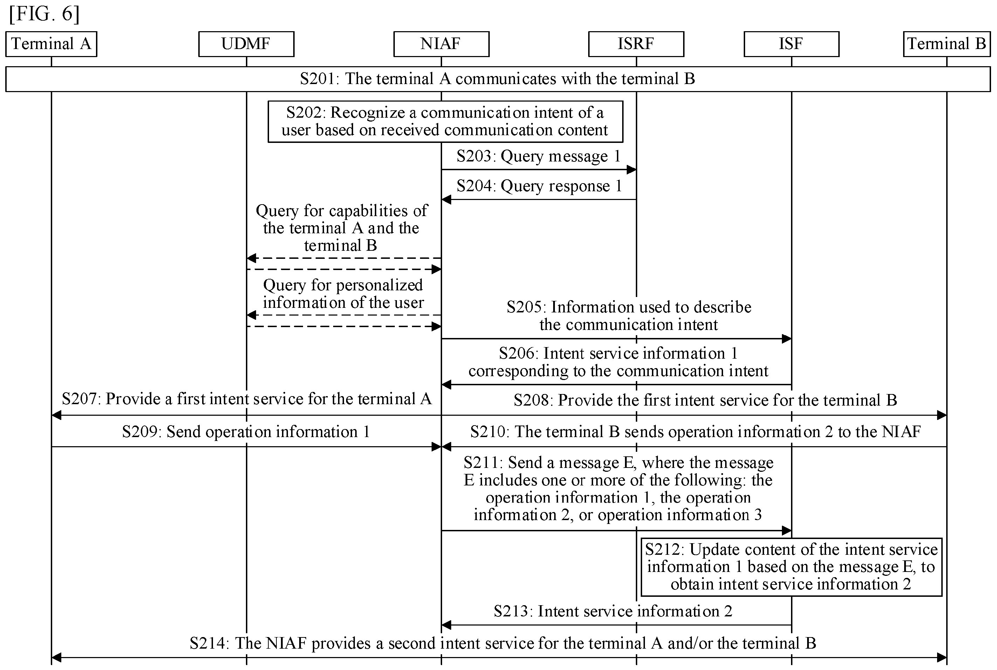

FIG. 6 is a second schematic flowchart of a communication method according to an embodiment of this application. In the method, an NIAF invokes an AIGC capability of an ISF to generate interactive intent service information, and sends the intent service information to users, to provide a more flexible intent service. As shown in FIG. 6, the communication method includes but is not limited to the following steps.

S201: A terminal A communicates with a terminal B.

In a possible implementation, for an implementation of step S201 in this embodiment of this application, refer to an implementation of step S101 in the embodiment shown in FIG. 5. Details are not described herein again.

S202: The NIAF recognizes a communication intent of a user based on received communication content.

In a possible implementation, for an implementation of step S202 in this embodiment of this application, refer to an implementation of step S102 in the embodiment shown in FIG. 5. Details are not described herein again.

In a possible implementation, a difference from the embodiment shown in FIG. 5 includes that in this embodiment of this application, the communication intent of the user may involve selections by both communication parties. For example, when a user 1 invites a user 2 to watch a movie together, both parties need to negotiate about a type and a name of the movie, a cinema location, showtime, seats, and the like. In a dinner party scenario, both parties need to negotiate about a catering type, a restaurant location, meal time, dishes, and the like.

The following describes the communication intent of the user with reference to scenarios by using examples. It may be understood that communication content in the following scenarios may be carried in a plurality of session messages. It may be further understood that the communication content in the following scenarios may be partial communication content exchanged between the terminal A and the terminal B during a multimedia call.

### Scenario 6: movie watching

User 1: "Shall we go to the movies this weekend?"

User 2: "What movies have been released recently?"

User 1: "There are several big movies with your favorite type. I'll ask the intent assistant to send them to you."

The NIAF recognizes, based on the foregoing communication content, that a communication intent of the user 1 is to send information about movies that are to be released at this weekend and that satisfy a preference of the user 2 to the user 2 (and the user 1).

### Scenario 7: a dinner party

User 1: "We're having a dinner party with old classmates tomorrow night. Do you have any suggestions?"

User 2: "There are several good restaurants just opened at Mall X."

User 1: "Do they have private rooms? We expect eight to 10 people."

User 2: "No problem. I'll ask the intent assistant to pick out some suitable ones and send them to you."

The NIAF recognizes, based on the foregoing communication content, that a communication intent of the user 2 is to send information about a new restaurant at Mall X that has a high score and has private rooms for 8 to 10 people to the user 1 (and the user 2).

It may be understood that based on the communication content in the session message, the NIAF can recognize the communication intent but cannot necessarily learn whether the communication intent of the user involves the selections by both communication parties. The NIAF may determine, based on an output format of a subsequently found ISF, whether the communication intent of the user involves the selections by both communication parties, or whether intent service information is interactive. For details, refer to the following descriptions. Details are not described herein.

S203: The NIAF sends a query message 1 to an ISRF, where the query message 1 is used to query for an ISF supporting the communication intent.

S204: The ISRF sends a query response 1 to the NIAF, where the query response 1 includes information about the ISF supporting the communication intent.

In a possible implementation, for implementations of step S203 and step S204 in this embodiment of this application, refer to implementations of step S103 and step S104 in the embodiment shown in FIG. 5. Details are not described herein again.

It may be understood that a difference from the embodiment shown in FIG. 5 includes that in the foregoing scenario 6 and scenario 7, the NIAF respectively obtains a movie ISF and a catering ISF through query, and does not need to obtain a digital human image of the user 1 and/or a digital human image of the user 2. For example, in the foregoing scenario 6 and scenario 7, an invocation parameter of the ISF includes personalized information (such as interests and preferences for movies and catering types) of the user 1 and/or the user 2, and the NIAF may query a UDMF for the personalized information of the user 1 and/or the user 2. A query manner is the same as a manner in which the NIAF queries the UDMF for digital human information of a user. Details are not described herein again.

In a possible implementation, the query response 1 may further include an output format of the ISF. The output format includes one or more of the following: a modality (such as a text/voice/video), a presentation format (such as 2D/3D/VR/AR), or a resolution of an output parameter. In addition, the output format may further include a type (such as interactive or non-interactive) of output intent service information. After receiving the query response 1, the NIAF may determine, based on the output format of the ISF, whether the communication intent involves the selections by both communication parties, to facilitate subsequent processing of the intent service information. It may be understood that if the output format of the ISF indicates that the intent service information output by the ISF is interactive, it indicates that the communication intent of the user involves the selections by both communication parties, and the NIAF may subsequently convert the intent service information returned by the ISF into an interactive form, and then send the intent service information to a terminal of the user. If the output format of the ISF indicates that the intent service information output by the ISF is non-interactive, it indicates that the communication intent of the user does not involve the selections by both communication parties.

In this embodiment of this application, that the intent service information is interactive or interactive may be understood as follows: The user may perform an operation such as marking, selection, sorting, subscription, or confirmation on the presented intent service information via the terminal.

S205: The NIAF sends, to the found ISF, information used to describe the communication intent.

S206: The ISF sends, to the NIAF, intent service information 1 corresponding to the communication intent.

In a possible implementation, for implementations of step S205 and step S206 in this embodiment of this application, refer to implementations of step S105 and step S106 in the embodiment shown in FIG. 5. Details are not described herein again. It may be understood that the intent service information 1 in this embodiment of this application may be interactive.

In a possible implementation, the intent service information 1 may be obtained through adaptation (sorting, filtering, or the like) for personalized information of the user. For example, in the foregoing scenario 6, the NAIF may provide information about a movie type that the user 2 likes or hates to the movie ISF, that is, a message A includes the personalized information of the user 2. The movie ISF may sort the movie type that the user 2 likes with a high priority in generated intent service information, or filter out the movie type that the user 2 hates, to obtain the intent service information 1. Similarly, in the foregoing scenario 7, the catering ISF may also sort or filter restaurants, dishes, and the like in generated intent service information based on a preference of the user 1 for dishes or catering types, to obtain the intent service information 1. Alternatively, a message A does not include the personalized information of the user. In this case, after receiving the intent service information 1 returned by the ISF, the NIAF may perform processing (such as sorting or filtering) on the intent service information 1 based on the personalized information of the user, to obtain processed intent service information 1.

S207: The NIAF provides a first intent service for the terminal A.

S208: The NIAF provides the first intent service for the terminal B.

In a possible implementation, for implementations of step S207 and step S208 in this embodiment of this application, refer to implementations of step S107 and step S108 in the embodiment shown in FIG. 5. Details are not described herein again.

In a possible implementation, the NIAF may separately provide the first intent service for the terminal A and the terminal B, for example, separately send the intent service information to the terminal A and the terminal B. For a manner in which the NIAF sends the intent service information to the terminal A and the terminal B, refer to related descriptions in the embodiment shown in FIG. 5. Details are not described herein again. The intent service information sent by the NIAF to the terminal A and the terminal B is interactive, or may also be obtained through adaptation (sorting, filtering, or the like) for the personalized information of the user. The intent service information sent by the NIAF to the terminal A and the terminal B may be the intent service information 1 returned by the ISF, or may be intent service information obtained by the NIAF by processing the intent service information 1 returned by the ISF. It may be further understood that a presentation form of the intent service information sent by the NIAF to the terminal A may be adapted to a capability of the terminal A, and a presentation form of the intent service information sent by the NIAF to the terminal B may be adapted to a capability of the terminal B.

S209: The terminal A sends operation information 1 to the NIAF, where the operation information 1 includes an operation event of the user 1 for the first intent service.

S210: The terminal B sends operation information 2 to the NIAF, where the operation information 2 includes an operation event of the user 2 for the first intent service.

In a possible implementation, after receiving the intent service information, the terminal A and the terminal B may output and display the intent service information. For example, the terminal A and the terminal B may determine, based on a format of the intent service information returned by the NIAF, whether the intent service information is interactive. For example, if the intent service information received by the terminal A and the terminal B is a video stream, it indicates that the intent service information is non-interactive, in other words, the user cannot operate the intent service information. If the intent service information received by the terminal A and the terminal B is a web page, it indicates that the intent service information is interactive, in other words, the user can operate the intent service information.

In a possible implementation, the user 1 may perform an operation such as marking, selection, sorting, subscription, or confirmation on the intent service information presented on the terminal A. Similarly, the user 2 may perform an operation such as marking, selection, sorting, subscription, or confirmation on the intent service information presented on the terminal B. For example, in the foregoing scenario 6, the intent service information may include a series of movie posters (including covers, introductions, and the like), and the user 1 and the user 2 may separately select a favorite movie from the movie posters. For example, in the foregoing scenario 7, the intent service information may include restaurant information (including a restaurant name and a menu), and the user 1 and the user 2 may separately select a favorite restaurant and a favorite dish from the restaurant information. The terminal A generates the operation information 1 in response to the operation of the user 1, where the operation information 1 includes the operation event of the user 1 for the intent service information, such as the selected movie or the selected restaurant and dish. The terminal B generates the operation information 2 in response to the operation of the user 2, where the operation information 2 includes the operation event of the user 2 for the intent service information, such as the selected movie or the selected restaurant and dish. The terminal A may send the operation information 1 to the NIAF, and the terminal B may send the operation information 2 to the NIAF.

In a possible implementation, if the terminal A establishes an intent service media channel with the NIAF, the terminal A may send the operation information 1 to the NIAF through the intent service media channel. Similarly, if the terminal B establishes an intent service media channel with the NIAF, the terminal B may also send the operation information 2 to the NIAF through the intent service media channel. If neither the terminal A nor the terminal B establishes an intent service media channel with the NIAF, the terminal A may carry the operation information 1 in a user plane message to be sent to the terminal B, and send the user plane message to a UPF-A to which the terminal A belongs. Similarly, the terminal B may add the operation information 2 to a user plane message to be sent to the terminal A, and send the user plane message to a UPF-B to which the terminal B belongs. Because an intent assistance function has been activated, the UPF-A forwards the user plane message to the NIAF after receiving the user plane message from the terminal A, and the UPF-B also forwards the user plane message to the NIAF after receiving the user plane message from the terminal B. The NIAF may obtain the operation information 1 by parsing the user plane message from the terminal A, and may obtain the operation information 2 by parsing the user plane message from the terminal B. It may be understood that in this implementation, a payload (payload) format of the user plane message may need to be extended to include both original user session information and the operation information. In other words, the operation information may be in a payload part of the user plane message.

In a possible implementation, an execution sequence of step S209 and step S210 is not limited in this embodiment of this application. For example, step S209 may be performed before step S210, may be performed after step S210, or may be performed simultaneously/in parallel with step S210.

S211: The NIAF sends a message E to the ISF, where the message E includes one or more of the following: the operation information 1, the operation information 2, or operation information 3, and the operation information 3 is determined based on the operation information 1 and the operation information 2.

S212: The ISF updates content of the intent service information 1 based on the message E, to obtain intent service information 2.

S213: The ISF sends the intent service information 2 to the NIAF.

In a possible implementation, after obtaining the operation information 1 and the operation information 2, the NIAF may send the message E to the ISF. The message E may include one or more of the following: the operation information 1, the operation information 2, or the operation information 3. The operation information 3 may be information obtained by performing comprehensive processing (such as taking an intersection set or taking a union set) on the operation information 1 and the operation information 2. In other words, the NIAF may merge and summarize the selections (namely, the operation information 1 and the operation information 2) of the user 1 and the user 2, and then send merged and summarized information to the ISF. For example, in the foregoing scenario 6, the operation information 1 includes three movies x, y, and z selected by the user 1, and the operation information 2 includes two movies w and x selected by the user 2. The NIAF may take an intersection set of the operation information 1 and the operation information 2 to obtain the operation information 3 (including the movie x). Alternatively, the NIAF takes a union set of the operation information 1 and the operation information 2 to obtain the operation information 3 (including the four movies w, x, y, and z). Certainly, the NIAF may alternatively send the selection (namely, the operation information 1) of the user 1 and the selection (namely, the operation information 2) of the user 2 to the ISF, and the NIAF does not perform merging and summarization.

In a possible implementation, after receiving the message E, the ISF may update the content of the intent service information 1 based on the message E, to obtain the intent service information 2. The ISF may send the intent service information 2 to the NIAF. It may be understood that if the message E includes the operation information 1 and the operation information 2, but does not include the operation information 3, the ISF returns two pieces of intent service information 2 to the NIAF, where one is intent service information 2 obtained through an update based on the operation information 1, and the other is intent service information 2 obtained through an update based on the operation information 2. The NIAF may perform coordinated merging (such as taking an intersection set or taking a union set) on the two pieces of intent service information 2 received, to obtain intent service information 3. Then, the NIAF may send the intent service information 3 to the terminal A and the terminal B. If the message E includes the operation information 3, the ISF returns one piece of intent service information 2 to the NIAF, where the intent service information 2 is obtained through an update based on the operation information 3 (where the operation information 3 is information obtained by performing comprehensive processing (such as taking an intersection set or taking a union set) on the operation information 1 and the operation information 2). Then, the NIAF may feed back the intent service information 2 to the terminal A and the terminal B.

For example, the ISF may perform selection, sorting, or filtering on the content of the intent service information 1 based on the operation information, to obtain the intent service information 2. For example, in the foregoing scenario 6, the operation information 1 includes the three movies x, y, and z selected by the user 1, and the ISF may select the three movies x, y, and z from the intent service information 1, and obtain more information (such as hot movie reviews, scores, cinemas, showtime, and seating maps) about the three movies x, y, and z, to generate the intent service information 2.

In a possible implementation, the intent service information 2/the intent service information 3 fed back by the NIAF to the terminal A and the terminal B may also be interactive. In this case, in this embodiment of this application, step S209 to step S213 may be repeatedly performed until an intent service result is obtained or the intent service function is deactivated. It may be understood that the operation (such as ticket booking or dish ordering) performed by the user on the intent service information may require user authorization. After receiving the operation information of the user, the NIAF may obtain digital identity authorization (such as a token) of the user 1 and/or digital identity authorization (such as a token) of the user 2 from a related network element such as the UDMF. An obtaining manner is the same as a manner in which the NIAF queries the UDMF for the digital human information. Details are not described herein. In step S212, the NIAF may further provide the digital identity authorization (such as the token) of the user 1 and/or the digital identity authorization (such as the token) of the user 2 for the ISF, for example, carry the digital identity authorization of the user 1 and/or the digital identity authorization of the user 2 in the message E for completing the corresponding intent service operation (such as ticket booking, dish ordering, or reservation), to obtain updated intent service information, where the updated intent service information includes the intent service result (such as a ticket booking result, a dish ordering result, or reservation result). For ease of description, it is assumed below that the intent service information 2 includes the intent service result.

S214: The NIAF provides a second intent service for the terminal A and/or the terminal B.

In a possible implementation, that the NIAF provides the second intent service for the terminal A and/or the terminal B may be: The NIAF triggers, based on the intent service information 2, the terminal A and/or the terminal B to perform a task corresponding to the intent service information 2. For example, after obtaining the intent service information 2, the NIAF determines that the intent service information 2 includes the intent service result (such as the ticket booking result, the dish ordering result, or the reservation result). If the intent service result is a success (such as a ticket booking success, a dish ordering success, or a reservation success), the NIAF may trigger a plurality of terminals (which may be other terminals that do not participate in the multimedia call) belonging to the user 1 and the user 2 in a network to perform a task related to the intent service result. For example, the NIAF may query the UDMF for information about the terminals (such as addresses of the terminals, identifiers of the terminals, or types/capabilities of the terminals) belonging to the user 1 and the user 2. For example, the NIAF may send a query message 4 to the UDMF, where the query message 4 may include identification information (such as IMSIs or identities) of the user 1 and the user 2, and the query message 4 may be used to query for the information about the terminals of the users. After receiving the query message 4, the UDMF may locally query for information about terminals bound to the identification information of the user 1 and the user 2 (where a plurality of terminals may be bound to one user), and may return a query response 4 to the NIAF, where the query response 4 may include the information about the terminals of the user 1 and the user 2. Then, the NIAF may separately send an instruction to the plurality of terminals found, to drive the terminals to perform the task related to the intent service result. For example, the NIAF may send a schedule reminder instruction (such as opening time of a movie for which a ticket is successfully booked, or arrival time for a successful reservation) to a smartwatch of the user 1 and/or a smartwatch of the user 2, to set a schedule reminder on the smartwatch of the user 1 and/or the smartwatch of the user 2. For another example, the NIAF may send a route planning instruction (including a start location and a destination, where the destination may be a location of a cinema with a successfully booked ticket, a location of a restaurant with a successful reservation, or the like) to a smart car of the user 1 and/or a smart car of the user 2, to set corresponding route planning and the like on the smart car of the user 1 and/or the smart car of the user 2. For example, the NIAF may send the instruction to the terminal by using control plane signaling, or certainly may carry the instruction in a user plane message on a user plane. This is not limited in embodiments of this application.

In this embodiment of this application, the NIAF combines a context of a communication session of the user in a communication process of the user, recognizes a communication intent of the user, and invokes a corresponding ISF. The ISF dynamically generates interactive intent service information based on an AIGC technology, and sends the interactive intent service information to the user, so that the user can perform an operation on the intent service information. The NIAF may obtain digital identity authorization of the user based on the operation of the user, so that the user can obtain an intent service result (for example, for ticket booking or meal booking), and the NIAF can trigger, based on the intent service result, a plurality of terminals related to the user to perform a task. Because the NIAF and the ISF may be deployed in a core network, in this embodiment of this application, a network-wide and cross-platform intent service can be provided for the user in a call process of the user, improving communication efficiency.

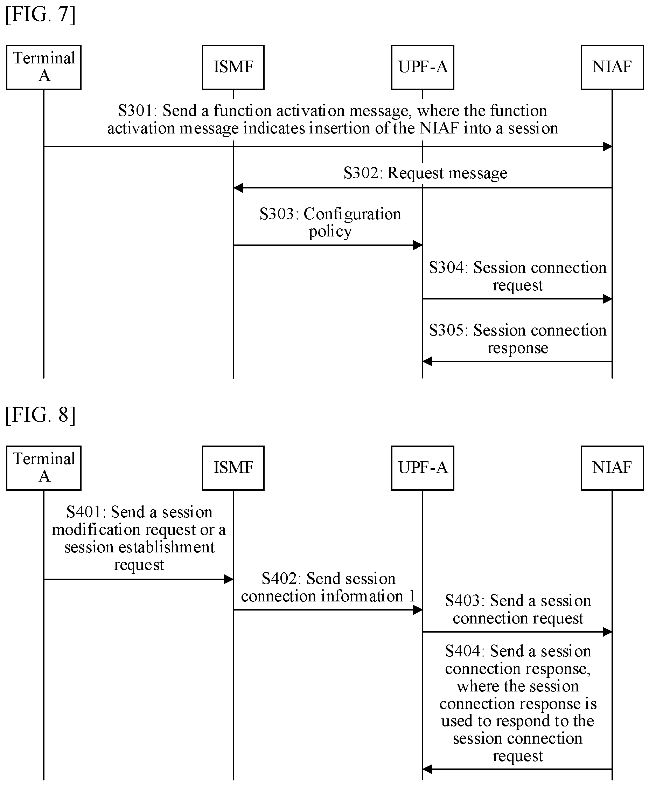

FIG. 7 is a third schematic flowchart of a communication method according to an embodiment of this application. In the method, an intent assistance function is activated by using an application layer message during a call. In a possible implementation, this embodiment of this application may be implemented in combination with the embodiment shown in FIG. 5 or FIG. 6, or may be implemented independently. This is not limited in this application.

As shown in FIG. 7, the communication method includes but is not limited to the following steps.

S301: A terminal A sends a function activation message to an NIAF, where the function activation message indicates that the NIAF is to be inserted into a session.

In a possible implementation, the terminal A has established an end-to-end multimedia communication session with a terminal B before step S301. A user 1 may activate or deactivate the intent assistance function via the terminal A. A specific manner includes but is not limited to activation or deactivation by using a voice instruction, a gesture instruction, or a tap on a specific function button on the terminal A. The terminal A generates the function activation message in response to an operation of the user 1 for activating the intent assistance function, and may send the function activation message to the NIAF. The function activation message may be used to activate the intent assistance function, in other words, the function activation message indicates that the NIAF is to be inserted into the session. In this embodiment of this application, "activating the intent assistance function" may be understood as "inserting the NIAF into the session", and the two may be understood as equivalent. Alternatively, the terminal A generates a function deactivation message in response to an operation of the user 1 for deactivating the intent assistance function, and may send the function deactivation message to the NIAF. The function deactivation message may be used to deactivate the intent assistance function, in other words, the function deactivation message indicates removal of the NIAF from the session. In this embodiment of this application, "deactivating the intent assistance function" may be understood as "removing the NIAF from the session", and the two may be understood as equivalent. It may be understood that the intent assistance function may be deactivated when the intent assistance function has been activated. It may be further understood that both the function activation message and the function deactivation message sent by the terminal A to the NIAF may be forwarded by a user plane function (namely, a UPF-A) to which the terminal A belongs. For example, the function activation message or the function deactivation message sent by the terminal A first arrives at a base station connected to the terminal A, the base station forwards the function activation message or the function deactivation message to the UPF-A to which the terminal A belongs, and the UPF-A forwards the function activation message or the function deactivation message to the NIAF.

In a possible implementation, the function activation message or the function deactivation message may include session information. The session information may indicate the communication session established between the terminal A and the terminal B. For example, the session information may include one or more of the following: characteristic parameters (for example, an internet protocol (internet protocol, IP) quintuple: a source IP address, a destination IP address, a source port, a destination port, and a protocol type) of one or more sessions, or one or more session identifiers. The one or more sessions may include the multimedia communication session established between the terminal A and the terminal B.

In a possible implementation, the function activation message or the function deactivation message may further include one or more of the following: indication information 1 or indication information 2. The indication information 1 may indicate activation/deactivation of the intent assistance function, in other words, the indication information 1 may indicate insertion or removal of the NIAF into or from the session. The indication information 2 may indicate a session direction for which the intent assistance function is activated/deactivated, in other words, the indication information 2 indicates a transmission direction of communication content for which the NIAF performs intent recognition, such as uplink, downlink, or bidirectional. For example, uplink may be a direction in which the terminal A sends a message to the terminal B, downlink may be a direction in which the terminal B sends a message to the terminal A, and bidirectional may mean that the terminal A sends a message to the terminal B and the terminal B sends a message to the terminal A. It may be understood that if the function activation/deactivation message does not include the indication information 1, a function of the message may be indicated by a message name of the function activation/deactivation message.

In a possible implementation, the function activation/deactivation message may be an application layer message, such as an HTTP message or a media over user datagram protocol (UDP) internet connection (QUIC) (Media over QUIC, MoQ) message. For example, the HTTP message is extended by defining a specific HTTP URL parameter indicating that the message is used to activate/deactivate the intent assistance function. For example, an activate_intent parameter is added to a target URL address of an HTTP GET message. When the activate_intent parameter is set to true, activation of the intent assistance function or insertion of the NIAF into the session is indicated. When the activate_intent parameter is set to false, disabling/deactivation of the intent assistance function or removal of the NIAF from the session is indicated. In addition, a sessionId parameter may be added to the target URL address of the HTTP GET message. The parameter is set to a characteristic parameter (such as an IP quintuple) of a session for which the intent assistance function needs to be activated/deactivated (or into or from which the NIAF needs to be inserted or removed). Certainly, the parameter may alternatively be set to a session identifier (such as a session name or a session ID). A dir (direction) parameter may be further added to the target URL address of the HTTP GET message, indicating a session direction (such as uplink represented by "up", downlink represented by "dl", and bidirectional represented by "bi") for which the intent assistance function is activated/deactivated (or the NIAF is inserted or removed). For example, a possible message form (extracted) is as follows:
GET http://niaf.example.com?activate_intent=true&sessionId=<5-tuple>&dir=bi.

Alternatively, a specific well-known URL manner may be used to simplify parameters in the HTTP GET message. For example, the activate_intent parameter is replaced by an address prefixed with intent_service. In other words, the HTTP GET message carries an intent_service prefix indicating that the message is used to activate the intent assistance function or indicates that the NIAF is to be inserted into the session. For example, a possible message form (extracted) is as follows:
GET http://intent_service.example.com?sessionId=<5-tuple>&dir=bi.

For another example, the MoQ message is extended by adding, to a subscription request (SUBSCRIBE REQUEST) message, a parameter indicating activation/deactivation of the intent assistance function. For example, a session name "intent_assistant" is added to the subscribe request message, to quickly recognize a purpose of a session identified by the session name, where the session may be used to subsequently transfer intent assistance information. In addition, parameter key values activate_intent and associatedTrackIds are added to the subscribe request message. When activate_intent is set to true, activation of the intent assistance function is indicated. When activate_intent is set to false, disabling/deactivation of the intent assistance function is indicated. associatedTrackIds indicates an identifier of a user session for which the intent assistance function is activated/deactivated, and a value of associatedTrackIds includes an uplink session identifier (a session message from the terminal A to the terminal B in this embodiment of this application) and/or a downlink session identifier (a session message from the terminal B to the terminal A in this embodiment of this application). Certainly, associatedTrackIds may alternatively indicate a session characteristic parameter (for example, an IP quintuple). For example, a possible message form is as follows:

```
    SUBSCRIBE REQUEST Message {
          Full Track Name Length (i),
          Full Track Name (intent_assistant),
    Track Request Parameters {
    activate_intent = true,
    associatedTrackIds=<uplink_trackId>, <downlink_trackId>
    }.
        }.
```

S302: The NIAF sends a request message to an ISMF, where the request message is used to request to establish a connection between the NIAF and the UPF-A serving the session, and the request message includes an address of the NIAF.

S303: The ISMF sends a configuration policy to the UPF-A, where the configuration policy includes session connection information, the session connection information is used to establish the connection between the UPF-A and the NIAF, and the connection may be used to transmit the session message.

In a possible implementation, after receiving the function activation message, the NIAF may send the request message to the ISMF, where the request message may be used to request to establish the connection between the NIAF and the UPF-A serving the session indicated by the session information. For example, the request message may include the session information. For example, the request message may further include the indication information 2.

After receiving the request message, the ISMF may complete a necessary authorization and verification process. For example, the ISMF queries, from the UDMF, whether the user 1 corresponding to the terminal A has subscribed to the intent assistance function. If the user 1 has subscribed to the intent assistance function, the ISMF may send the configuration policy to the UPF-A to which the terminal A belongs; or if the user 1 has not subscribed to the intent assistance function, the ISMF may reject the request message. The configuration policy may include the session connection information, and the session connection information may be used to establish a session channel between the UPF-A and the NIAF. The session channel may be used to transmit the session message. For example, the session connection information may include one or more of the following: the address of the NIAF, a port of the NIAF, or a protocol (for example, a transmission control protocol (transmission control protocol, TCP), a user datagram protocol (user datagram protocol, UDP), or a QUIC) used by the session channel. For example, the configuration policy may further include one or more of the following: the session information or the indication information 2. It may be understood that if the session direction indicated by the indication information 2 is uplink, after the UPF-A establishes the session channel with the NIAF, the UPF may forward, to the NIAF, only a session message sent by the terminal A to the terminal B (that is, an uplink session). If the session direction indicated by the indication information 2 is downlink, after the UPF-A establishes the session channel with the NIAF, the UPF may forward, to the NIAF, only a session message sent by the terminal B to the terminal A (that is, a downlink session). If the session direction indicated by the indication information 2 is bidirectional, after the UPF-A establishes the session channel with the NIAF, the UPF may forward, to the NIAF, both a session message sent by the terminal A to the terminal B (that is, an uplink session) and a session message sent by the terminal B to the terminal A (that is, a downlink session).

In another possible implementation, after receiving the function deactivation message, the NIAF may send a session termination message to the UPF-A, where the session termination message may be used to disconnect the session channel between the NIAF and the UPF-A. The session channel may be used to transmit the session message. "Disconnecting the session channel between the NIAF and the UPF-A" may be understood as follows: The NIAF no longer receives a session message forwarded by the UPF-A, or the UPF-A no longer forwards a session message to the NIAF. The UPF-A receives the session termination message, and may be disconnected from the NIAF. For example, the session termination message may include the session information associated with the intent assistance function, in other words, the session termination message carries the session information included in the function deactivation message. Correspondingly, the session termination message may be used to disconnect one or more session channels between the NIAF and the UPF-A, and the one or more session channels correspond to the session information in the session termination message. In other words, the NIAF may disconnect one part of session channels with the UPF-A by using the session termination message, but still maintain the other part of session channels. In other words, the NIAF may no longer receive a part of session messages forwarded by the UPF-A (this part of session messages belong to the session determined by using the session information), but receive session messages of another session forwarded by the UPF-A; or the UPF-A no longer forwards, to the NIAF, a session message that belongs to the session determined by using the session information.

S304: The UPF-A sends a session connection request to the NIAF, where the session connection request is used to request to establish the session channel, and the session channel may be used to transmit the session message.

S305: The NIAF sends a session connection response to the UPF-A, where the session connection response is used to respond to the session connection request.

In a possible implementation, after receiving the configuration policy, the UPF-A may send the session connection request to the NIAF, where the session connection request may be used to request to establish the session channel between the UPF-A and the NIAF. After receiving the session connection request, the NIAF may send the session connection response to the UPF-A, where the session connection response may be used to accept the session connection request. The UPF-A establishes the session channel with the NIAF, to forward the session message of the user to the NIAF.

It may be understood that this embodiment of this application is described by using an example in which the terminal A sends a message for activating/deactivating the intent assistance function. In actual application, the terminal B may send a message for activating/deactivating the intent assistance function, and an implementation is similar to that of this embodiment of this application. Details are not described herein.

In a possible implementation, after step S305, the UPF-A may send one or more session messages to the NIAF, and the one or more session messages may belong to one session. The NIAF may recognize a communication intent of the user based on communication content in the one or more session messages. For example, if the configuration policy includes the session information, the one or more session messages sent by the UPF-A to the NIAF may belong to a session determined by using the session information. For example, the session message sent by the UPF-A to the NIAF may be exchanged between the terminal A and the terminal B in real time. Certainly, the UPF-A may further send a historical session message or historical communication content to the NIAF, so that the NIAF better understands a context of the user session, and recognizes the communication intent of the user from the context. It may be understood that based on different application scenarios and/or the configuration policy (for example, including the session direction) delivered by the ISMF, the UPF-A may forward only the session message or communication content sent by the terminal A to the terminal B (that is, the uplink session), forward only the session message or communication content sent by the terminal B to the terminal A (that is, the downlink session), or forward both the session message or communication content sent by the terminal A to the terminal B (that is, the uplink session) and the session message or communication content sent by the terminal B to the terminal A (that is, the downlink session).

In a possible implementation, because the session message of the user may be further processed and forwarded by an application function (AF) between the UPF-A and a UPF-B, the UPF-A in this embodiment of this application may alternatively be the AF. Details are not described herein.

In this embodiment of this application, the application layer message is extended to indicate insertion of the NIAF into the session. After receiving the application layer message indicating insertion into the session, the NIAF requests the ISMF to join the session. The ISMF sends the session connection information to a UPF. The UPF establishes a session channel with the NIAF based on the session connection information, so that the NIAF obtains the communication content of the user from the UPF. This supports intent recognition by the NIAF, laying a foundation for semantic communication.

FIG. 8 is a fourth schematic flowchart of a communication method according to an embodiment of this application. In the method, an intent assistance function is activated by using a control plane message before or during a call. In a possible implementation, this embodiment of this application may be implemented in combination with the embodiment shown in FIG. 5 or FIG. 6, or may be implemented independently. This is not limited in this application.

As shown in FIG. 8, the communication method includes but is not limited to the following steps.

S401: A terminal A sends a session modification request or a session establishment request to an ISMF, where the session modification request or the session establishment request includes indication information 1, and the indication information 1 indicates activation of the intent assistance function.

In a possible implementation, a user 1 may activate or deactivate the intent assistance function via the terminal A. A specific manner includes but is not limited to activation or deactivation by using a voice instruction, a gesture instruction, or a tap on a specific function button on the terminal A. The terminal A may generate the indication information 1 in response to an operation of the user 1 for activating the intent assistance function. It may be understood that if the terminal A has established an end-to-end multimedia communication session with a terminal B before step S401, the terminal A may send the session modification request to the ISMF, where the session modification request includes the indication information 1, and the indication information 1 may indicate activation or deactivation of the intent assistance function; or if the terminal A has not established an end-to-end multimedia communication session with a terminal B before step S401, the terminal A may send the session establishment request to the ISMF, where the session establishment request includes the indication information 1, and the indication information 1 may indicate activation of the intent assistance function. The session establishment request may be used to establish a multimedia communication session that passes through the NIAF from the terminal A to the terminal B.

In a possible implementation, the session modification request may further include indication information 2, and the indication information 2 may indicate a session direction for which the intent assistance function is activated or deactivated. The session establishment request may further include indication information 2, and the indication information 2 may indicate a session direction for which the intent assistance function is activated.

In a possible implementation, a 5G system is used as an example. The session modification request may be a protocol data unit (protocol data unit, PDU) session modification request (PDU Session Modification Request), and the session establishment request may be a PDU session establishment request (PDU Session Establishment Request). The PDU session modification request and the PDU session establishment request may be carried by using non-access stratum (non-access stratum, NAS) signaling. Therefore, the NAS signaling may be extended with a parameter indicating activation of the intent assistance function. For example, the PDU session modification request or the PDU session establishment request is extended with a new information element (information element, IE) "Activate_Intent". When Activate_Intent is set to true, activation of the intent assistance function is indicated. When Activate_Intent is set to false, disabling/deactivation of the intent assistance function is indicated. It may be understood that Activate_Intent in the PDU session establishment request is set to true. The PDU session modification request or the PDU session establishment request may be further extended with a new information element "Intent_Direction" set to uplink (uplink), downlink (downlink), or bidirectional, indicating the session direction for which the intent assistance function is activated/deactivated.

S402: The ISMF sends session connection information 1 to a UPF-A, where the session connection information 1 is used to establish a session channel between the UPF-A and the NIAF, and the session channel may be used to transmit a session message.

In a possible implementation, after the ISMF receives the session modification request or the session establishment request, if the indication information 1 in the session modification request or the session establishment request indicates activation of the intent assistance function, the ISMF may send, after completing a necessary authorization and verification process, the session connection information 1 to the UPF-A to which the terminal A belongs. If the ISMF receives the session modification request, the session connection information 1 may be used to modify a current session to establish the session channel between the UPF-A and the NIAF. If the ISMF receives the session establishment request, the session connection information 1 may be used to establish the session channel between the UPF-A and the NIAF. The session connection information 1 may include one or more of the following: an address of the NIAF, a port of the NIAF, or a protocol used by the session channel.

In a possible implementation, the ISMF may further send session connection information 2 to the NIAF. The session connection information 2 may include one or more of the following: an address of the UPF-A, a port of the UPF-A, or the protocol used by the session channel. The ISMF may notify, by using the session connection information 2, the NIAF in advance that the UPF-A is authorized by a network, so that the NIAF prepares a related session resource in advance.

In a possible implementation, if the indication information 1 in the session modification request indicates deactivation of the intent assistance function, the ISMF may send a deactivation message to the UPF-A, where the deactivation message may indicate to disconnect the session channel between the UPF-A and the NIAF, and the session channel may be used to transmit the session message. For example, the deactivation message may include a session identifier in the session modification request. In this case, after receiving the deactivation message, the UPF-A may no longer forward a session message corresponding to the session identifier to the NIAF. Alternatively, after receiving the deactivation message, the UPF may send a session termination message to the NIAF, where the session termination message may be used to disconnect the session channel between the UPF-A and the NIAF. For example, the NIAF receives the session termination message, and may be disconnected from the UPF-A. For example, the session termination message may include the session identifier. After receiving the session termination message, the NIAF may not be disconnected from the UPF-A, but no longer perform intent recognition on the session message corresponding to the session identifier.

S403: The UPF-A sends a session connection request to the NIAF, where the session connection request is used to request to establish the session channel, and the session channel may be used to transmit the session message.

S404: The NIAF sends a session connection response to the UPF-A, where the session connection response is used to respond to the session connection request.

In a possible implementation, for implementations of step S403 and step S404 in this embodiment of this application, refer to implementations of step S304 and step S305 in the embodiment shown in FIG. 7. Details are not described herein again. It may be understood that this embodiment of this application is described by using an example in which the terminal A sends the session modification request/session establishment request to activate/deactivate the intent assistance function. In actual application, the terminal B may send the session modification request/session establishment request to activate/deactivate the intent assistance function, and an implementation is similar to that of this embodiment of this application. Details are not described herein.

In a possible implementation, after step S404, the NIAF may send a session modification response or a session establishment response to the terminal A, where the session modification response may indicate a session modification success, and the session establishment response may indicate a session establishment success. For example, the session modification response may be a PDU session modification response (PDU Session Modification Response), and the session establishment response may be a PDU session establishment response (PDU Session Establishment Response). It may be understood that in this embodiment of this application, a purpose of "activating the intent assistance function" may be inserting the NIAF into an existing session or establishing a session that passes through the NIAF.

In this embodiment of this application, the control plane message is used to activate/deactivate the intent assistance function and perform session management, so that information carried in the message is simplified. For example, session information (such as a characteristic parameter or a session identifier of a session) does not need to be carried in the message. This can reduce overheads.

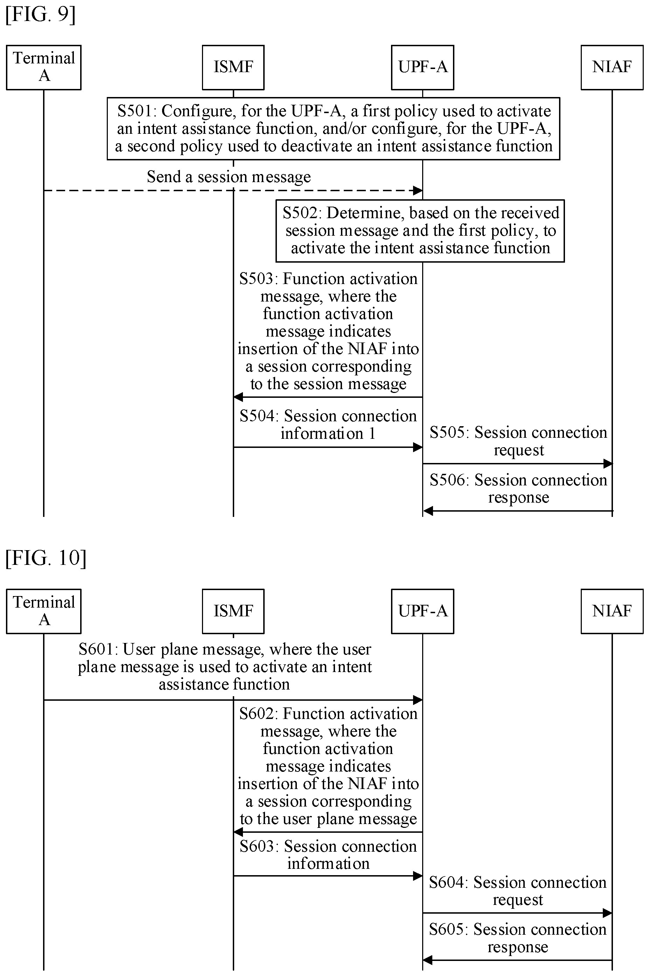

FIG. 9 is a fifth schematic flowchart of a communication method according to an embodiment of this application. In the method, an NIAF is added to a session by a network side before or during a call. In a possible implementation, this embodiment of this application may be implemented in combination with the embodiment shown in FIG. 5 or FIG. 6, or may be implemented independently. This is not limited in this application.

As shown in FIG. 9, the communication method includes but is not limited to the following steps.

S501: Configure, for a UPF-A, a first policy used to activate an intent assistance function, and/or configure, for a UPF-A, a second policy used to deactivate an intent assistance function.

In a possible implementation, when an ISMF finds, from a UDMF, that subscription data of a user 1 includes the intent assistance function, the ISMF may send, to the UPF-A, the first policy used to activate the intent assistance function; or when an ISMF finds, from a UDMF, that subscription data of a user 1 does not include the intent assistance function, the ISMF may send, to the UPF-A, the second policy used to deactivate the intent assistance function, or does not deliver the first policy.

In another possible implementation, the first policy used to activate the intent assistance function and/or the second policy used to deactivate the intent assistance function may be preconfigured/predefined in the UPF-A.

For example, the first policy may be activating the intent assistance function when it is detected that a session message of a user satisfies a condition (such as a user type, a user identifier, or a session type). The second policy may be deactivating the intent assistance function when it is detected that a session message of a user satisfies a condition (such as a user type, a user identifier, or a session type). For example, when a session message received by the UPF-A belongs to a mobile originated service, a mobile terminated service, or a bidirectional service, the intent assistance function is activated/deactivated. For another example, when a session message received by the UPF-A is from a voice call, a video call, or a digital human call, the intent assistance function is activated/deactivated. For another example, when a session message received by the UPF-A is a real-time call, a non-real-time message, offline answering, or the like, the intent assistance function is activated/deactivated. For another example, when a session message received by the UPF-A is from a specific user identity or a specific terminal type, or is at specific time or in a location area, the intent assistance function is activated/deactivated.

S502: The UPF-A determines, based on the received session message and the first policy, to activate the intent assistance function, or determines, based on the received session message and the second policy, to deactivate the intent assistance function.

S503: The UPF-A sends a function activation message to the ISMF, where the function activation message indicates that the NIAF is to be inserted into a session corresponding to the session message.

In a possible implementation, the UPF-A receives a session message from a terminal A, and if the session message satisfies the first policy, the UPF-A determines to activate the intent assistance function. The UPF-A may send the function activation message to the ISMF, where the function activation message may indicate insertion of the NIAF into the session corresponding to the session message, or indicate activation of the intent assistance function. The function activation message may include one or more of the following: indication information 1 or indication information 2. The indication information 1 may indicate insertion of the NIAF into the session corresponding to the session message, or indicate activation of the intent assistance function. The indication information 2 may indicate a session direction for which the intent assistance function is activated, in other words, indicate a transmission direction of communication content for which the NIAF performs intent recognition, such as uplink, downlink, or bidirectional.

For example, a 5G system is used as an example. The function activation message may be a packet forwarding control protocol (packet forwarding control protocol, PFCP) node report request (PFCP Node Report Request) message. For example, the PFCP node report request message is extended by adding a new information element "Activate_Intent" to the message. When Activate_Intent is set to true, activation of the intent assistance function or insertion of the NIAF into the session is indicated. Correspondingly, when Activate_Intent is set to false, disabling/deactivation of the intent assistance function is indicated. The PFCP node report request message may be further extended with a new information element "Intent_Direction" set to uplink (uplink), downlink (downlink), or bidirectional, indicating the session direction for which the intent assistance function is activated.

In another possible implementation, if the session message satisfies the second policy, the UPF-A determines to deactivate the intent assistance function. The UPF-A may send a session termination message to the NIAF, where the session termination message may be used to disconnect a session channel between the NIAF and the UPF-A, and the session channel may be used by the UPF-A to forward the session message of the user to the NIAF. For example, the session termination message may include one or more of the following: indication information 1 or indication information 2. The indication information 1 may indicate deactivation of the intent assistance function. The indication information 2 may indicate a session direction for which the intent assistance function is deactivated. After receiving the session termination message, the NIAF may be disconnected from the UPF-A. For example, if the session termination message includes the indication information 2, after receiving the session termination message, the NIAF may not be disconnected from the UPF-A, but no longer perform intent recognition on a session message in this session direction in a current session.

S504: The ISMF sends session connection information 1 to the UPF-A, where the session connection information 1 is used to establish the session channel between the UPF-A and the NIAF, and the session channel may be used to transmit the session message or communication content.

In a possible implementation, after receiving the function activation message, the ISMF may perform a necessary permission or policy check (for example, check whether the user 1 has subscribed to the intent assistance function). After the permission or policy check succeeds (for example, the user 1 has subscribed to the intent assistance function), the ISMF may send the session connection information 1 to the UPF-A. The session connection information 1 includes one or more of the following: an address of the NIAF, a port of the NIAF, or a protocol used by the session channel. The session connection information 1 may be used to establish the session channel between the UPF-A and the NIAF. The session channel can be used to transmit the session message or communication content of the user to the NIAF.

In a possible implementation, after the permission or policy check succeeds (for example, the user 1 has subscribed to the intent assistance function), the ISMF may further send session connection information 2 to the NIAF. The session connection information 2 may include one or more of the following: an address of the UPF-A, a port of the UPF-A, or the protocol used by the session channel. The ISMF may notify, by using the session connection information 2, the NIAF in advance that the UPF-A is authorized by a network, so that the NIAF prepares a related session resource in advance.

In a possible implementation, after the permission or policy check succeeds (for example, the user 1 has subscribed to the intent assistance function), the ISMF may first send a session modification request or a session establishment request to the terminal A, where the session modification request or the session establishment request may be used to request to activate the intent assistance function, to obtain authorization confirmation (that is, agreement to enable/activate the intent assistance function) of the user 1. It may be understood that the session modification request includes identification information of a to-be-modified session. For example, the session modification request may be a PDU session modification request, and the session establishment request may be a PDU session establishment request. For descriptions of the PDU session modification request and the PDU session establishment request, refer to related descriptions of step S401 in the embodiment shown in FIG. 8. Details are not described herein. After the terminal A receives the session modification request or the session establishment request, the user 1 may operate the terminal A to agree to enable/activate the intent assistance function, and the terminal A may send a confirmation result of the user 1 to the ISMF by using a session modification response or a session establishment response. The session modification response or the session establishment response may include the confirmation result of the user 1, such as the agreement of the user 1 to activate the intent assistance function. After receiving the session modification response or the session establishment response from the terminal A, the ISMF may send the session connection information 1 to the UPF-A. For related descriptions of the session connection information 1 herein, refer to related descriptions of step S402 in the embodiment shown in FIG. 8. Details are not described herein.

S505: The UPF-A sends a session connection request to the NIAF, where the session connection request is used to request to establish the session channel, and the session channel may be used to transmit the session message or the communication content.

S506: The NIAF sends a session connection response to the UPF-A, where the session connection response is used to respond to the session connection request.

In a possible implementation, for implementations of step S505 and step S506 in this embodiment of this application, refer to implementations of step S304 and step S305 in the embodiment shown in FIG. 7. Details are not described herein again. It may be understood that this embodiment of this application is described by using an example in which the UPF-A activates/deactivates the intent assistance function. In actual application, a UPF-B may activate/deactivate the intent assistance function, and an implementation is similar to that of this embodiment of this application (where only the UPF-A is replaced with the UPF-B). Details are not described herein.

In this embodiment of this application, the network side determines, based on a received session message and a configured related policy, whether to activate the intent assistance function. When it is determined to activate the intent assistance function, the NIAF is inserted into the session by using a control plane message, so that information carried in the message can be simplified. For example, session information (such as a characteristic parameter or a session identifier of a session) does not need to be carried in the message. This can reduce overheads.

FIG. 10 is a sixth schematic flowchart of a communication method according to an embodiment of this application. In the method, an intent assistance function is activated by using a user plane message during a call. In a possible implementation, this embodiment of this application may be implemented in combination with the embodiment shown in FIG. 5 or FIG. 6, or may be implemented independently. This is not limited in this application.

Refer to FIG. 10. The communication method includes but is not limited to the following steps.

S601: A terminal A sends a user plane message to a UPF-A, where the user plane message is used to activate the intent assistance function.

In a possible implementation, before step S601, for example, in a process in which the terminal A establishes a multimedia channel session with a terminal B, an example in which the terminal A establishes the multimedia communication session with the terminal B by using a session description protocol (session description protocol, SDP) is used. The terminal A sends an invite (INVITE) message (such as a session description protocol (session description protocol, SDP) offer, namely, an SDP offer) to the UPF-A to which the terminal A belongs, to initiate a session establishment request. The invite message (such as the SDP offer) may be used to establish a multimedia channel between the UPF-A and the terminal A. The multimedia channel may be used to transmit not only a session message of a user, but also subsequent intent service information. Similarly, the terminal B may also send an invite message (such as an SDP offer) to a UPF-B to which the terminal B belongs, to initiate a session establishment request. The invite message (such as the SDP offer) may be used to establish a multimedia channel between the UPF-B and the terminal B. The multimedia channel may be used to transmit not only a session message of a user, but also subsequent intent service information. In other words, the terminal A/terminal B may pre-negotiate, in the invite message, with the UPF-A/UPF-B to establish the multimedia channel that supports transmission of the intent service information.

For example, the invite message may be extended with a new media attribute line (a-line) by using a session description protocol (session description protocol, SDP), to support a real-time transport protocol (real-time transport protocol, RTP) message header extension (extmap), thereby carrying a corresponding RTP message header extension field in the subsequent user plane message to indicate activation/deactivation of the intent assistance function. For example, a=extmap:99 urn:xxx:params:rtp-hdrext:intent-active. The media attribute line (a-line) may indicate that the established multimedia channel supports transmission of the intent service information.

After receiving the invite message (such as the SDP offer), the UPF-A/UPF-B may learn that the multimedia channel that the terminal A/terminal B wants to establish supports transmission of the intent service information (or supports the terminal A/terminal B in sending the user plane message that carries the RTP message header extension field), and may send an answer message (such as an SDP answer, namely, an SDP answer) to the terminal A. The answer message (such as the SDP answer) may be used to respond to the invite message (such as the SDP offer). If the answer message (such as the SDP answer) indicates a success, it indicates that the multimedia channel between the UPF-A and the terminal A is successfully established or the multimedia channel between the UPF-B and the terminal B is successfully established. It may be understood that when this embodiment of this application is implemented in combination with the embodiment shown in FIG. 5 or FIG. 6, a process in which an NIAF sends the intent service information to the terminal A and the terminal B may include: The NIAF may first send the intent service information to the UPF-A and the UPF-B, then the UPF-A sends the intent service information to the terminal A through the multimedia channel established herein, and the UPF-B sends the intent service information to the terminal B through the multimedia channel established herein.

In a possible implementation, after the multimedia channel is successfully established, a user 1 may activate or deactivate the intent assistance function via the terminal A. The terminal A generates the user plane message in response to an operation of the user 1 for activating or deactivating the intent assistance function, and may send the user plane message to the UPF-A. The user plane message may be used to activate or deactivate the intent assistance function. For example, the user plane message may include parameter information used to activate or deactivate the intent assistance function. For example, the parameter information may be the real-time transport protocol (RTP) message header extension.

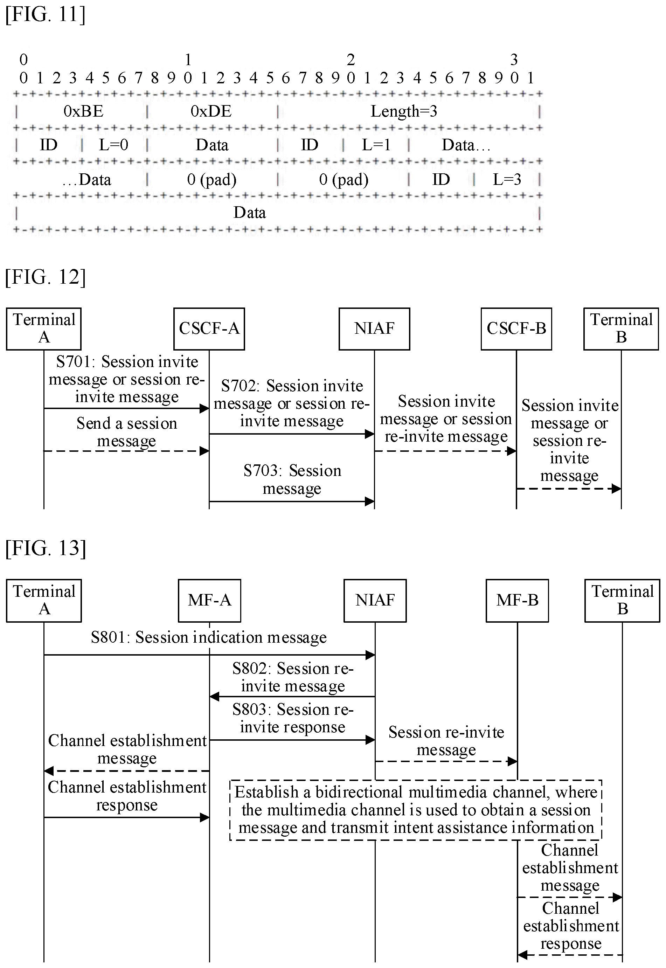

For example, FIG. 11 is a diagram of a structure of the RTP message header extension according to an embodiment of this application. As shown in FIG. 11, a new identifier (ID) and data (data) may be added to the RTP message header extension. The ID represents intent-active. When a value of the data is true, activation of the intent assistance function is indicated; or when a value of the data is false, disabling/deactivation of the intent assistance function is indicated.

In a possible implementation, after receiving the user plane message, the UPF-A may parse the user plane message, and determine whether the user plane message includes the parameter information (such as the RTP message header extension) used to activate/deactivate the intent assistance function. If the user plane message includes parameter information for activating the intent assistance function (for example, the value of the data corresponding to the ID indicating intent-active in the RTP message header extension is true), the following steps S602 to S605 are performed.

If the user plane message includes parameter information for deactivating the intent assistance function (for example, the value of the data corresponding to the ID indicating intent-active in the RTP message header extension is false), the UPF may send a session termination message to the NIAF, where the session termination message may be used to disconnect the session channel between the NIAF and the UPF-A, and the session channel may be used by the UPF-A to forward a session message of the user to the NIAF. After receiving the session termination message, the NIAF may be disconnected from the UPF-A.

S602: The UPF-A sends a function activation message to an ISMF, where the function activation message indicates that the NIAF is to be inserted into a session corresponding to the user plane message.

In a possible implementation, for an implementation of step S602 in this embodiment of this application, refer to an implementation of step S503 in the embodiment shown in FIG. 9. Details are not described herein again.

S603: The ISMF sends session connection information to the UPF-A, where the session connection information is used to establish the session channel between the UPF-A and the NIAF, and the session channel may be used to transmit the session message and/or the communication content.

In a possible implementation, after receiving the function activation message, the ISMF may perform a necessary permission or policy check (for example, check whether the user 1 has subscribed to the intent assistance function). After the permission or policy check succeeds (for example, the user 1 has subscribed to the intent assistance function), the ISMF may send the session connection information to the UPF-A. The session connection information includes one or more of the following: an address of the NIAF, a port of the NIAF, or a protocol used by the session channel. The session connection information may be used to establish the session channel between the UPF-A and the NIAF. The session channel may be used to forward the session message of the user to the NIAF.

S604: The UPF-A sends a session connection request to the NIAF, where the session connection request is used to request to establish the session channel, and the session channel may be used to transmit the session message and/or the communication content.

S605: The NIAF sends a session connection response to the UPF-A, where the session connection response is used to respond to the session connection request.

In a possible implementation, for implementations of step S604 and step S605 in this embodiment of this application, refer to implementations of step S304 and step S305 in the embodiment shown in FIG. 7. Details are not described herein again. It may be understood that this embodiment of this application is described by using an example in which the terminal A sends the user plane message to activate/deactivate the intent assistance function. In actual application, the terminal B may send a user plane message to activate/deactivate the intent assistance function, and an implementation is similar to that of this embodiment of this application. Details are not described herein. It may be understood that in this embodiment of this application, a purpose of "activating the intent assistance function" may be inserting the NIAF into an existing session.

In this embodiment of this application, the user plane message is extended to activate/deactivate the intent assistance function, so that complexity of session management can be reduced, and intent recognition by the NIAF can be supported, thereby laying a foundation for semantic communication.

FIG. 12 is a seventh schematic flowchart of a communication method according to an embodiment of this application. In the method, a session management process based on an IP multimedia system (IP media system, IMS) is mainly described. The IMS may include a call session control function (call session control function, CSCF), a media function (media function, MF), and an NIAF, and optionally, further includes an ISF. For example, the NIAF and/or the ISF each is used as an application server (application server, AS) in the IMS. In this method, a CSCF-A represents a CSCF to which a terminal A belongs, and a CSCF-B represents a CSCF to which a terminal B belongs. In a possible implementation, this embodiment of this application may be implemented in combination with the embodiment shown in FIG. 5 or FIG. 6, or may be implemented independently. This is not limited in this application.

As shown in FIG. 12, the communication method includes but is not limited to the following steps.

S701: The terminal A sends a session invite message or a session re-invite message to the CSCF-A, where the session invite message or the session re-invite message includes a first parameter, and the first parameter indicates activation or deactivation of an intent assistance function.

In a possible implementation, a user 1 may activate or deactivate the intent assistance function via the terminal A, and the terminal A may generate the first parameter in response to an operation of the user 1 for activating/deactivating the intent assistance function. It may be understood that if the terminal A has established an end-to-end multimedia communication session with the terminal B before step S701, the terminal A may send the session re-invite message (such as SIP re-invite, used to modify an existing user session) to the CSCF (denoted as the CSCF-A) to which the terminal A belongs, where the session re-invite message (such as SIP re-invite) may include the first parameter, and the first parameter may indicate activation or deactivation of the intent assistance function. If the terminal A has not established an end-to-end multimedia communication session with the terminal B before step S701, the terminal A may send the session invite message (such as SIP invite, used to initiate a new session) to the CSCF-A, where the session invite message (such as SIP invite) may include the first parameter, and the first parameter may indicate activation of the intent assistance function. It may be further understood that the terminal A may establish the multimedia communication session with the terminal B via the IMS, and media content of the multimedia communication session may be forwarded by an MF-A to which the terminal A belongs and an MF-B to which the terminal B belongs. Based on different network deployment situations, the MF-A and the MF-B may be a same entity.

In a possible implementation, the session invite message or the session re-invite message may further include a second parameter, and the second parameter may indicate a session direction for which the intent assistance function is activated/deactivated.

For example, a feature-tag named Intent_Activate (namely, the first parameter) may be added to the session invite message (such as SIP invite) or the session re-invite message (such as SIP re-invite). When a value of the feature-tag is true, activation of the intent assistance function is indicated; or when a value of the feature-tag is false, disabling/deactivation of the intent assistance function is indicated. Another feature-tag named Intent_Direction (namely, the second parameter) may be further added to the session invite message (such as SIP invite) or the session re-invite message (such as SIP re-invite). A value of the feature-tag may be uplink, downlink, or bidirectional, indicating the session direction for which the intent assistance function is activated/deactivated.

S702: The CSCF-A sends the session invite message or the session re-invite message to the NIAF.

In a possible implementation, after receiving the session invite message (such as SIP invite) or the session re-invite message (such as SIP re-invite), the CSCF-A may parse the first parameter (such as the feature-tag) in the session invite message or the session re-invite message to determine whether to activate the intent assistance function. If the CSCF-A determines to activate the intent assistance function (for example, the value of the feature-tag is true), the CSCF-A may forward the session invite message or the session re-invite message to the NIAF. It may be understood that the CSCF-A has obtained a routing address of the NIAF before forwarding the session invite message or the session re-invite message to the NIAF. For example, the CSCF-A may obtain the routing address of the NIAF by using a SIP register (SIP register) message or in a preconfiguration manner. After receiving the session invite message or the session re-invite message, the NIAF may further forward the session invite message or the session re-invite message to the CSCF (denoted as the CSCF-B) to which the terminal B belongs, the CSCF-B forwards the session invite message or the session re-invite message to an MF (denoted as the MF-B) to which the terminal B belongs, and the MF-B forwards the session invite message to the terminal B, so that terminal B knows that the intent assistance function is activated.

In a possible implementation, after receiving the session invite message (such as SIP invite) or the session re-invite message (such as SIP re-invite), the CSCF-A may send a session invite response or a session re-invite response to the terminal A. The session invite response may indicate agreement to establish the multimedia communication session. The session re-invite response may indicate agreement to modify the existing multimedia communication session.

In a possible implementation, if the first parameter indicates deactivation of the intent assistance function, the CSCF-A may still forward the session invite message or the session re-invite message to the NIAF, but the CSCF-A no longer forwards a session message corresponding to the session invite message or the session re-invite message to the NIAF. The NIAF may also send the session invite message or the session re-invite message to the terminal B via the CSCF-B and the MF-B, so that the terminal B knows that the intent assistance function is deactivated.

S703: The CSCF-A sends the session message to the NIAF, where the session message belongs to a session corresponding to the session invite message or the session re-invite message.

In a possible implementation, if the first parameter indicates activation of the intent assistance function, the session message exchanged between the terminal A and the terminal B is forwarded by the MF-A, the MF-B, the CSCF-A, the CSCF-B, and the NIAF. Therefore, after receiving a session message from the terminal A, the CSCF-A may send the session message to the NIAF, where the session message includes communication content, so that the NIAF may recognize a communication intent of the user based on the communication content in the session message. The session message may belong to the session corresponding to the session invite message or the session re-invite message.

It may be understood that this embodiment of this application is described by using an example in which the terminal A activates/deactivates the intent assistance function. In actual application, the terminal B may activate/deactivate the intent assistance function, and an implementation is similar to that of this embodiment of this application. Details are not described herein. It may be further understood that when this embodiment of this application is implemented in combination with the embodiment shown in FIG. 5 or FIG. 6, the NIAF may further send intent service information to the terminal A and/or the terminal B in a piggyback manner. For example, the NIAF may first send the obtained intent service information to the MF-A and/or the MF-B, the MF-A inserts the intent service information into a media plane message to be sent to the terminal A in a piggyback manner, and/or the MF-B inserts the intent service information into a media plane message to be sent to the terminal B in a piggyback manner. In this implementation, a payload (payload) format of the media plane message may need to be extended to include both original user session information and intent service information related to the original user session information. In other words, the intent service information may be in a payload part of the media plane message.

In this embodiment of this application, a parameter is carried in the session invite message or the session re-invite message to indicate activation of the intent assistance function, and the NIAF is added to the IMS, so that the NIAF can obtain session content of the user, to support intent recognition by the NIAF, laying a foundation for semantic communication.

FIG. 13 is an eighth schematic flowchart of a communication method according to an embodiment of this application. In the method, a session management process for bypass deployment of an NIAF in a user session based on an IP multimedia system (IMS) is mainly described. The IMS may include a CSCF, an MF, and the NIAF, and optionally, further includes an ISF. For example, the NIAF and/or the ISF each is used as an application server (AS) in the IMS. In this method, a CSCF-A represents a CSCF to which a terminal A belongs, and a CSCF-B represents a CSCF to which a terminal B belongs. In a possible implementation, this embodiment of this application may be implemented in combination with the embodiment shown in FIG. 5 or FIG. 6, or may be implemented independently. This is not limited in this application.

As shown in FIG. 13, the communication method includes but is not limited to the following steps.

S801: The terminal A sends a session indication message to the NIAF, where the session indication message includes information indicating a session between the terminal A and the terminal B, and the session indication message indicates that the NIAF is to be inserted into the session, in other words, the session indication message indicates the NIAF to transmit, by using the session, intent service information with a media network element serving the session.

In a possible implementation, the terminal A has established a multimedia communication session with the terminal B via the IMS before step S801. After the terminal A establishes the multimedia channel session with the terminal B, the terminal A may generate the session indication message (such as SIP REFER) in response to an operation of a user 1 for activating an intent assistance function, and may send the session indication message to the NIAF. The session indication message may include identification information (for example, a call-ID or a session-ID parameter) of one or more (existing) sessions. For example, the session indication message may further include an indication for activation of the intent assistance function. The session indication message may indicate insertion of the NIAF into the one or more sessions. In other words, the session indication message indicates the NIAF to transmit, by using the session, the intent service information with the media network element (such as an MF-A) serving the session.

It may be understood that the session indication message may be forwarded by the CSCF-A. In other words, the session indication message sent by the terminal A first arrives at the CSCF-A, and after receiving the session indication message, the CSCF-A may forward the session indication message to the NIAF.

S802: The NIAF sends a session re-invite message to the MF-A, where the session re-invite message includes the information indicating the session between the terminal A and the terminal B, and the session re-invite message is used to request to join the session, in other words, the session re-invite message is used to request to transmit the intent service information by using the session.

In a possible implementation, after receiving the session indication message, the NIAF may send the session re-invite message (such as SIP re-invite) to the MF-A to which the terminal A belongs. The session re-invite message may include the identification information (such as the call-ID or session-ID parameter) of the one or more sessions. The session re-invite message may be used to request to join the one or more sessions. In other words, the session re-invite message is used to request to transmit the intent service information by using the one or more sessions.

S803: The MF-A sends a session re-invite response to the NIAF. The session re-invite response indicates agreement to transmit the intent service information by using the session.

In a possible implementation, after receiving the session re-invite message, the MF-A may negotiate, based on an SDP media parameter in the session re-invite message, with the NIAF to establish a bidirectional multimedia channel. For ease of differentiation, the bidirectional multimedia channel is denoted as a first multimedia channel. The first multimedia channel may be used to transmit not only a session message and communication content of a user, but also the intent service information. For example, the MF-A sends a session re-invite response to the NIAF, where the session re-invite response indicates agreement to transmit the intent service information by using the session. Thereafter, the MF-A may forward session messages or communication content of the one or more sessions to the NIAF, so that the NIAF may recognize a communication intent of the user based on communication content of the user.

In a possible implementation, after receiving the session re-invite message, the MF-A may send a channel establishment message to the terminal A. The channel establishment message may be used to request to establish a multimedia channel between the MF-A and the terminal A. For ease of differentiation, multimedia channel is denoted as a second multimedia channel. After receiving the channel establishment message, the terminal A may return a channel establishment response to the MF-A, where the channel establishment response indicates agreement to establish the second multimedia channel between the MF-A and the terminal A. The second multimedia channel may be used to transmit the intent service information. It may be understood that before this, a channel for transmitting user data (that is, communication content) already exists between the MF-A and the terminal A. The second multimedia channel established herein may be dedicated to transmitting the intent service information.

In a possible implementation, after receiving the session indication message, the NIAF may further send the session re-invite message to an MF-B to which the terminal B belongs, where the session re-invite message may include the identification information (such as the call-ID or a session-ID parameter) of the one or more sessions. The session re-invite message may be used to request to join the one or more sessions. After receiving the session re-invite message, the MF-B may also negotiate, based on an SDP media parameter in the session re-invite message, with the NIAF to establish a bidirectional multimedia channel. After receiving the session re-invite message, the MF-B may further send a channel establishment message to the terminal B. The channel establishment message may be used to request to establish the multimedia channel between the MF-B and the terminal B. For a specific establishment manner, refer to the foregoing descriptions, and details are not described herein. After receiving the channel establishment message, the terminal B may return a channel establishment response to the MF-B, where the channel establishment response indicates agreement to establish the multimedia channel between the MF-B and the terminal B.

It may be understood that when the MF-B and the MF-A are a same entity, or when the terminal B does not need to obtain the intent service information, the NIAF does not need to send the session re-invite message to the MF-B.

In this embodiment of this application, the NIAF is deployed in the user session in a bypass mode through out-of-session negotiation, so that the NIAF can obtain session content of the user, to support intent recognition by the NIAF, laying a foundation for semantic communication.

The foregoing content describes in detail the method provided in this application. To facilitate implementation of the foregoing solutions in embodiments of this application, embodiments of this application further provide a corresponding apparatus or device.

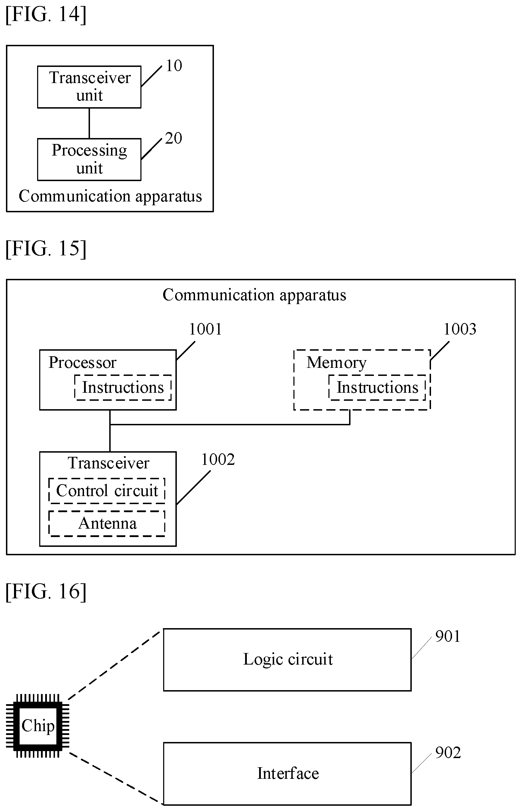

In embodiments of this application, various network elements of this application may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in this application, module division is an example, and is merely a logical function division. In actual implementation, another division manner may be used. The following describes, in detail with reference to FIG. 14 to FIG. 16, communication apparatuses in embodiments of this application.

FIG. 14 is a diagram of a structure of a communication apparatus according to an embodiment of this application. As shown in FIG. 14, the communication apparatus may include a transceiver unit 10 and a processing unit 20.

In some embodiments of this application, the communication apparatus may be the NIAF shown above, or a chip or a circuit disposed in the NIAF. In other words, the communication apparatus may be configured to perform steps, functions, or the like performed by the NIAF in the foregoing method embodiments.

The processing unit 20 is configured to recognize, based on communication content sent by a first terminal to a second terminal, a communication intent of a first user using the first terminal. The transceiver unit 10 is configured to send, to a second network element, information used to describe the communication intent. The transceiver unit 10 is further configured to receive, from the second network element, first intent service information corresponding to the communication intent. The processing unit 20 is further configured to provide a first intent service for the second terminal and/or the first terminal based on the first intent service information.

For example, the information used to describe the communication intent includes one or more of the following: a category of the communication intent, a topic of the communication intent, a keyword of the communication intent, or semantics of the communication intent.

For example, the transceiver unit 10 is further configured to: send a first query message to a third network element, where the first query message is used to query for the second network element supporting the communication intent; and receive a first response message from the third network element, where the first response message includes information about the second network element.

For example, the first query message includes a semantic vector of the communication intent. A similarity between a registration information vector of the second network element and the semantic vector of the communication intent is greater than a threshold. Alternatively, the second network element includes network elements corresponding to top K similarities in a plurality of similarities sorted in descending order, where the plurality of similarities include a similarity between the semantic vector of the communication intent and a registration information vector of each of a plurality of network elements stored in the third network element, and K is a positive integer.

For example, the processing unit 20 is specifically configured to: control the transceiver unit 10 to send the first intent service information to the second terminal and/or the first terminal; or send second intent service information to the second terminal and/or the first terminal, where the second intent service information is a result obtained by processing the first intent service information based on a capability of the second terminal and/or a capability of the first terminal.

For example, that the second intent service information is the result obtained by processing the first intent service information based on the capability of the second terminal and/or the capability of the first terminal includes: The second intent service information is intent service information obtained by processing a presentation form of the first intent service information to match an information display capability of the second terminal and/or an information display capability of the first terminal.

For example, the transceiver unit 10 is further configured to: send an address of the first network element to the second terminal and/or the first terminal; and receive a first message from the second terminal and/or the first terminal, where the first message is used to obtain the first intent service. The processing unit 20 is specifically configured to provide the first intent service for the second terminal and/or the first terminal based on the first message.

For example, the processing unit 20 is further configured to establish a communication connection to the second terminal and/or the first terminal. The processing unit 20 is further specifically configured to provide the first intent service for the second terminal and/or the first terminal through the communication connection.

For example, the transceiver unit 10 is further configured to receive operation information from the first terminal and/or the second terminal, where the operation information includes an operation event of the first user and/or an operation event of a second user using the second terminal for the first intent service. The transceiver unit 10 is further configured to send the operation information to the second network element. The transceiver unit 10 is further configured to receive third intent service information from the second network element, where the third intent service information is intent service information obtained by updating the first intent service information based on the operation event. The processing unit 20 is further configured to provide a second intent service for the second terminal and/or the first terminal based on the third intent service information.

For example, the processing unit 20 is specifically configured to trigger the first terminal and/or the second terminal to perform a task corresponding to the third intent service information.

For example, the transceiver unit 10 is further configured to send one or more of the following to the second network element: digital identity authorization information of the first user or digital identity authorization information of the second user, where the digital identity authorization information of the first user or the digital identity authorization information of the second user is used to generate the third intent service information with reference to the operation event.

For example, the transceiver unit 10 is further configured to send one or more of the following to the second network element: digital human information of the first user, digital human information of the second user, personalized information of the first user, and personalized information of the second user, where the digital human information of the first user, the digital human information of the second user, the personalized information of the first user, or the personalized information of the second user is used to generate the first intent service information with reference to the information used to describe the communication intent.

For example, the transceiver unit 10 is further configured to receive the communication content from a user plane network element, where the communication content is transmitted by using a session between the first terminal and the second terminal, and the user plane network element serves the session.

For example, the transceiver unit 10 is further configured to: receive a second message from the first terminal, where the second message includes information indicating the session, and the second message indicates that the first network element is to be inserted into the session; and send a first request message to a fourth network element, where the first request message is used to request to establish a connection between the first network element and the user plane network element serving the session, and the first request message includes the address of the first network element.

For example, the second message further includes indication information, and the indication information indicates that a transmission direction of the communication content is from the first terminal to the second terminal. The first request message further includes the second indication information.

For example, the transceiver unit 10 is further configured to receive the communication content from a media network element, where the communication content is sent by the first terminal to the second terminal via the media network element and the first network element.

For example, the communication content being sent by the first terminal to the second terminal via the media network element and the first network element includes: The communication content is sent by the first terminal to the second terminal by using a session, and the session is a session between the first terminal, the media network element, the first network element, and the second terminal.

For example, the transceiver unit 10 is further configured to: receive a third message from the first terminal, where the third message includes information indicating the session between the first terminal and the second terminal, and the third message indicates the first network element to transmit, by using the session, intent service information with the media network element serving the session; send a fourth message to the media network element, where the fourth message includes the information indicating the session, and the fourth message is used to request to transmit the intent service information by using the session; and receive a fifth message from the media network element, where the fifth message indicates agreement to transmit the intent service information by using the session.

It may be understood that the specific descriptions of the transceiver unit and the processing unit in this embodiment of this application are merely examples. For specific functions, steps, or the like performed by the transceiver unit and the processing unit, refer to the foregoing method embodiments. Details are not described herein again. In addition, for technical effects of this embodiment of this application, refer to the technical effects in the foregoing method embodiments. For brevity, details are not described herein again.

FIG. 14 is reused. In some other embodiments of this application, the communication apparatus may be the terminal A shown above, or a chip or a circuit disposed in the terminal A. In other words, the communication apparatus may be configured to perform steps, functions, or the like performed by the terminal A in the foregoing method embodiments.

The transceiver unit 10 is configured to send communication content to a second terminal, where the communication content includes a communication intent of a first user using the terminal A. The transceiver unit 10 is further configured to receive first intent service information corresponding to the communication intent. The processing unit 20 is configured to invoke an application associated with the first intent service information to output the first intent service information.

For example, a presentation form of the first intent service information matches an information display capability of the terminal A.

For example, the transceiver unit 10 is further configured to receive an address of a first network element. The transceiver unit 10 is further configured to send a first message to the first network element, where the first message is used to obtain the first intent service information.

For example, the processing unit 20 is further configured to establish a communication connection to the first network element. The transceiver unit 10 is specifically configured to receive, through the communication connection, the first intent service information corresponding to the communication intent.

For example, the processing unit 20 is further configured to generate operation information in response to an operation event of the first user for the first intent service information. The transceiver unit 10 is further configured to send the operation information to the first network element or a second network element. The transceiver unit 10 is further configured to receive second intent service information, where the second intent service information is intent service information obtained by updating the first intent service information based on the operation event.

For example, the processing unit 20 is further specifically configured to invoke, based on the second intent service information, an application associated with the second intent service information to perform a task corresponding to the second intent service information.

For example, the communication content is transmitted by using a session between the terminal A and the second terminal. The transceiver unit 10 is further configured to send a second message to a first network element, where the second message includes information indicating the session, and the second message indicates that the first network element is to be inserted into the session.

For example, the transceiver unit 10 is specifically configured to receive a user plane message from a user plane network element serving the session, where a payload (payload) of the user plane message carries the first intent service information.

For example, the second message further includes indication information, and the indication information indicates that a transmission direction of the communication content is from the terminal A to the second terminal.

For example, the communication content is transmitted by using a session between the terminal A and the second terminal. The transceiver unit 10 is further configured to send a third message to the first network element, where the third message includes information indicating the session, and the third message indicates the first network element to transmit, by using the session, the first intent service information with a media network element serving the session.

For example, the transceiver unit 10 is specifically configured to receive a media plane message from a media network element serving the session, where a payload (payload) of the media plane message carries the first intent service information.

It may be understood that the specific descriptions of the transceiver unit and the processing unit in this embodiment of this application are merely examples. For specific functions, steps, or the like performed by the transceiver unit and the processing unit, refer to the foregoing method embodiments. Details are not described herein again. In addition, for technical effects of this embodiment of this application, refer to the technical effects in the foregoing method embodiments. For brevity, details are not described herein again.

The foregoing describes the communication apparatus in embodiments of this application, and the following describes a possible product form of the communication apparatus. It should be understood that any form of product that has functions of the communication apparatus in FIG. 7 falls within the protection scope of embodiments of this application. It should be further understood that the following descriptions are merely examples, and do not limit a product form of the communication apparatus in embodiments of this application.

In a possible implementation, in the communication apparatus shown in FIG. 14, the processing unit 20 may be one or more processors. The transceiver unit 10 may be a transceiver. Alternatively, the transceiver unit 10 may be a sending unit and a receiving unit, where the sending unit may be a transmitter, the receiving unit may be a receiver, and the sending unit and the receiving unit are integrated into one component, for example, a transceiver. In this embodiment of this application, the processor and the transceiver may be coupled, or the like. A connection manner of the processor and the transceiver is not limited in embodiments of this application. In a process of performing the foregoing method, a process of sending information in the foregoing method may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed on the information before the information is input into the processor.

FIG. 15 is a diagram of another structure of a communication apparatus according to an embodiment of this application. As shown in FIG. 15, the communication apparatus provided in this embodiment of this application may be configured to implement the method described in any one of the foregoing method embodiments. Refer to the descriptions in the foregoing method embodiments. The communication apparatus may be the foregoing functional entities, or chips or circuits in the foregoing functional entities. For example, the communication apparatus includes one or more processors 1001 and a transceiver 1002. The communication apparatus may further include a memory 1003. In an implementation, the communication apparatus further includes an input/output apparatus (not shown in the figure).

The processor 1001 is mainly configured to: process a communication protocol and communication data, control the entire communication apparatus, execute a software program, and process data of the software program. The memory 1003 is mainly configured to store the software program and the data. The transceiver 1002 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal in a form of an electromagnetic wave via the antenna. When data is sent to the communication apparatus, the radio frequency circuit receives a radio frequency signal via the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

The processor 1001, the transceiver 1002, and the memory 1003 may be connected through a communication bus.

The processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

The processor 1001 may store instructions. The instructions may be a computer program. The computer program is executed by the processor 1001, to cause the communication apparatus to perform the method described in the foregoing method embodiments. The computer program may be solidified in the processor 1001. In this case, the processor 1001 may be implemented by hardware.

In an implementation, the communication apparatus may include a circuit. The circuit may implement a sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, such as a complementary metal oxide semiconductor (complementary metal oxide semiconductor, CMOS), an N-channel metal oxide semiconductor (N-channel Metal oxide semiconductor, NMOS), a P-channel metal oxide semiconductor (P-channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in this embodiment of this application may alternatively include more components than those shown in FIG. 15, or the like. This is not limited in embodiments of this application. The foregoing method performed by the processor and the transceiver is merely an example. For specific steps performed by the processor and the transceiver, refer to descriptions in the foregoing method embodiments.

In another possible implementation, in the communication apparatus shown in FIG. 14, the processing unit 20 may be one or more logic circuits. The transceiver unit 10 may be an input/output interface, also referred to as a communication interface, an interface circuit, an interface, or the like. Alternatively, the transceiver unit 10 may be a sending unit and a receiving unit, where the sending unit may be an output interface, the receiving unit may be an input interface, and the sending unit and the receiving unit are integrated into one unit, for example, an input/output interface. FIG. 16 is a diagram of still another structure of a communication apparatus according to an embodiment of this application. As shown in FIG. 16, the communication apparatus shown in FIG. 16 includes a logic circuit 901 and an interface 902. In other words, the processing unit 20 may be implemented by using the logic circuit 901, and the transceiver unit 10 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 16 shows an example in which the communication apparatus is a chip. The chip includes the logic circuit 901 and the interface 902.

In this embodiment of this application, the logic circuit and the interface may be coupled to each other. A specific connection manner of the logic circuit and the interface is not limited in embodiments of this application. The logical phone and the interface may be configured to implement the method described in any one of the foregoing method embodiments. Refer to the descriptions in the foregoing method embodiments.

It may be understood that the communication apparatus shown in embodiments of this application may implement the method provided in embodiments of this application in a form of hardware, or may implement the method provided in embodiments of this application in a form of software, or the like. This is not limited in embodiments of this application.

For a specific implementation of the embodiment shown in FIG. 16, refer to the foregoing embodiments. Details are not described herein again.

An embodiment of this application further provides a communication system. The communication system includes an NIAF, an ISF, a terminal A, and a terminal B, and optionally further includes an ISRF. The NIAF, the ISF, the terminal A, and the terminal B may be configured to perform the method in any one of the foregoing method embodiments.

In addition, this application further provides a computer program. The computer program is used to implement operations and/or processing performed by any network element in any one of the foregoing method embodiments in the method provided in this application.

This application further provides a computer program. The computer program is used to implement operations and/or processing performed by a terminal in the methods provided in this application.

This application further provides a computer-readable storage medium. The computer-readable storage medium stores computer code. When the computer code is executed by a computer, the computer is caused to perform operations and/or processing performed by any network element in any one of the foregoing method embodiments in the method provided in this application.

This application further provides a computer-readable storage medium. The computer-readable storage medium stores computer code. When the computer code is executed by a computer, the computer is caused to perform operations and/or processing performed by a terminal in the methods provided in this application.

This application further provides a computer program product. The computer program product includes computer code or a computer program. When the computer code or the computer program is executed by a computer, operations and/or processing performed by any network element in any one of the foregoing method embodiments in the method provided in this application are/is performed.

This application further provides a computer program product. The computer program product includes computer code or a computer program. When the computer code or the computer program is executed by a computer, operations and/or processing performed by a terminal in the method provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located at one position, or may be distributed on a plurality of network units. A part or all of the units may be selected based on an actual requirement, to achieve technical effects of the solutions provided in embodiments of this application.

In addition, the functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, the part contributing to the conventional technology, or all or a part of the technical solutions may be implemented in a form of a software product. The computer software product is stored in a readable storage medium and includes a plurality of instructions for instructing a computer device (which may be a personal computer, a server, or a network device) to perform all or a part of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
recognizing, by a first network element based on communication content sent by a first communication apparatus to a second communication apparatus, a communication intent of a first user using the first communication apparatus;
sending, by the first network element to a second network element, information used to describe the communication intent;
receiving, by the first network element from the second network element, first intent service information corresponding to the communication intent; and
providing, by the first network element, a first intent service for the second communication apparatus and/or the first communication apparatus based on the first intent service information.

2. The method according to claim 1, wherein the information used to describe the communication intent comprises one or more of the following: a category of the communication intent, a topic of the communication intent, a keyword of the communication intent, or semantics of the communication intent.

3. The method according to claim 1 or 2, wherein before the sending, by the first network element to the second network element, the information used to describe the communication intent, the method further comprises:
sending, by the first network element, a first query message to a third network element, wherein the first query message is used to query for the second network element supporting the communication intent; and
receiving, by the first network element, a first response message from the third network element, wherein the first response message comprises information about the second network element.

4. The method according to claim 3, wherein the first query message comprises a semantic vector of the communication intent; and
a similarity between a registration information vector of the second network element and the semantic vector of the communication intent is greater than a threshold; or
the second network element comprises network elements corresponding to top K similarities in a plurality of similarities sorted in descending order, wherein the plurality of similarities comprise a similarity between the semantic vector of the communication intent and a registration information vector of each of a plurality of network elements stored in the third network element, and K is a positive integer.

5. The method according to any one of claims 1 to 4, wherein the providing, by the first network element, the first intent service for the second communication apparatus and/or the first communication apparatus comprises:
sending, by the first network element, the first intent service information to the second communication apparatus and/or the first communication apparatus; or
sending, by the first network element, second intent service information to the second communication apparatus and/or the first communication apparatus, wherein the second intent service information is a result obtained by processing the first intent service information based on a capability of the second communication apparatus and/or a capability of the first communication apparatus.

6. The method according to claim 5, wherein that the second intent service information is the result obtained by processing the first intent service information based on the capability of the second communication apparatus and/or the capability of the first communication apparatus comprises:
the second intent service information is intent service information obtained by processing a presentation form of the first intent service information to match an information display capability of the second communication apparatus and/or an information display capability of the first communication apparatus.

7. The method according to any one of claims 1 to 6, wherein before the providing, by the first network element, the first intent service for the second communication apparatus and/or the first communication apparatus, the method further comprises:
sending, by the first network element, an address of the first network element to the second communication apparatus and/or the first communication apparatus; and
receiving, by the first network element, a first message from the second communication apparatus and/or the first communication apparatus, wherein the first message is used to obtain the first intent service; and
the providing, by the first network element, the first intent service for the second communication apparatus and/or the first communication apparatus comprises: providing, by the first network element, the first intent service for the second communication apparatus and/or the first communication apparatus based on the first message.

8. The method according to any one of claims 1 to 6, wherein the method further comprises:
establishing, by the first network element, a communication connection to the second communication apparatus and/or the first communication apparatus; and
the providing, by the first network element, the first intent service for the second communication apparatus and/or the first communication apparatus comprises:
providing, by the first network element, the first intent service for the second communication apparatus and/or the first communication apparatus through the communication connection.

9. The method according to any one of claims 1 to 8, wherein after the providing, by the first network element, the first intent service for the second communication apparatus and/or the first communication apparatus, the method further comprises:
receiving, by the first network element, operation information from the first communication apparatus and/or the second communication apparatus, wherein the operation information comprises an operation event of the first user and/or an operation event of a second user using the second communication apparatus for the first intent service;
sending, by the first network element, the operation information to the second network element;
receiving, by the first network element, third intent service information from the second network element, wherein the third intent service information is intent service information obtained by updating the first intent service information based on the operation event; and
providing, by the first network element, a second intent service for the second communication apparatus and/or the first communication apparatus based on the third intent service information.

10. The method according to claim 9, wherein the providing, by the first network element, the second intent service for the second communication apparatus and/or the first communication apparatus comprises:
triggering, by the first network element, the first communication apparatus and/or the second communication apparatus to perform a task corresponding to the third intent service information.

11. The method according to claim 10, wherein before the receiving, by the first network element, the third intent service information from the second network element, the method further comprises:
sending, by the first network element, one or more of the following to the second network element: digital identity authorization information of the first user or digital identity authorization information of the second user, wherein the digital identity authorization information of the first user or the digital identity authorization information of the second user is used to generate the third intent service information with reference to the operation event.

12. The method according to any one of claims 1 to 11, wherein before the receiving, by the first network element from the second network element, the first intent service information corresponding to the communication intent, the method further comprises:
sending, by the first network element, one or more of the following to the second network element: digital human information of the first user, digital human information of a second user, personalized information of the first user, and personalized information of the second user, wherein
the digital human information of the first user, the digital human information of the second user, the personalized information of the first user, or the personalized information of the second user is used to generate the first intent service information with reference to the information used to describe the communication intent.

13. The method according to any one of claims 1 to 12, wherein before the recognizing, by the first network element based on the communication content sent by the first communication apparatus to the second communication apparatus, the communication intent of the first user using the first communication apparatus, the method further comprises:
receiving, by the first network element, the communication content from a user plane network element, wherein the communication content is transmitted by using a session between the first communication apparatus and the second communication apparatus, and the user plane network element serves the session.

14. The method according to claim 13, wherein before the receiving, by the first network element, the communication content from the user plane network element, the method further comprises:
receiving, by the first network element, a second message from the first communication apparatus, wherein the second message comprises information indicating the session, and the second message indicates that the first network element is to be inserted into the session; and
sending, by the first network element, a first request message to a fourth network element (ISMF), wherein the first request message is used to request to establish a connection between the first network element and the user plane network element serving the session, and the first request message comprises the address of the first network element.

15. The method according to claim 14, wherein the second message further comprises indication information, the indication information indicates that a transmission direction of the communication content is from the first communication apparatus to the second communication apparatus, and the first request message further comprises the second indication information.

16. The method according to any one of claims 1 to 12, wherein before the recognizing, by the first network element based on the communication content sent by the first communication apparatus to the second communication apparatus, the communication intent of the first user using the first communication apparatus, the method further comprises:
receiving, by the first network element, the communication content from a media network element, wherein the communication content is sent by the first communication apparatus to the second communication apparatus via the media network element and the first network element.

17. The method according to claim 16, wherein the communication content being sent by the first communication apparatus to the second communication apparatus via the media network element and the first network element comprises:
the communication content is sent by the first communication apparatus to the second communication apparatus by using a session, and the session is a session between the first communication apparatus, the media network element, the first network element, and the second communication apparatus.

18. The method according to claim 16 or 17, wherein before the receiving, by the first network element, the communication content from the media network element, the method further comprises:
receiving, by the first network element, a third message from the first communication apparatus, wherein the third message comprises information indicating the session between the first communication apparatus and the second communication apparatus, and the third message indicates the first network element to transmit, by using the session, intent service information with the media network element serving the session;
sending, by the first network element, a fourth message to the media network element, wherein the fourth message comprises the information indicating the session, and the fourth message is used to request to transmit the intent service information by using the session; and
receiving, by the first network element, a fifth message from the media network element, wherein the fifth message indicates agreement to transmit the intent service information by using the session.

19. A communication method, comprising:
sending, by a first communication apparatus, communication content to a second communication apparatus, wherein the communication content comprises a communication intent of a first user using the first communication apparatus; and
receiving, by the first communication apparatus, first intent service information corresponding to the communication intent, and
invoking an application associated with the first intent service information to output the first intent service information.

20. The method according to claim 19, wherein a presentation form of the first intent service information matches an information display capability of the first communication apparatus.

21. The method according to claim 19 or 20, wherein before the receiving, by the first communication apparatus, the first intent service information corresponding to the communication intent, the method further comprises:
receiving, by the first communication apparatus, an address of a first network element; and
sending, by the first communication apparatus, a first message to the first network element, wherein the first message is used to obtain the first intent service information.

22. The method according to claim 19 or 20, wherein before the receiving, by the first communication apparatus, the first intent service information corresponding to the communication intent, the method further comprises:
establishing, by the first communication apparatus, a communication connection to a first network element; and
the receiving, by the first communication apparatus, the first intent service information corresponding to the communication intent comprises:
receiving, by the first communication apparatus through the communication connection, the first intent service information corresponding to the communication intent.

23. The method according to any one of claims 19 to 22, wherein after the first communication apparatus invokes a first application associated with the first intent service information to output the first intent service information, the method further comprises:
generating, by the first communication apparatus, operation information in response to an operation event of the first user for the first intent service information;
sending, by the first communication apparatus, the operation information to the first network element or a second network element; and
receiving, by the first communication apparatus, second intent service information, wherein the second intent service information is intent service information obtained by updating the first intent service information based on the operation event.

24. The method according to claim 23, wherein after the receiving, by the first communication apparatus, the second intent service information, the method further comprises:
invoking, by the first communication apparatus based on the second intent service information, an application associated with the second intent service information to perform a task corresponding to the second intent service information.

25. The method according to claim 19 or 20, wherein the communication content is transmitted by using a session between the first communication apparatus and the second communication apparatus; and
before the receiving, by the first communication apparatus, the first intent service information corresponding to the communication intent, the method further comprises:
sending, by the first communication apparatus, a second message to a first network element, wherein the second message comprises information indicating the session, and the second message indicates that the first network element is to be inserted into the session.

26. The method according to claim 25, wherein the receiving, by the first communication apparatus, the first intent service information corresponding to the communication intent comprises:
receiving, by the first communication apparatus, a user plane message from a user plane network element serving the session, wherein a payload payload of the user plane message carries the first intent service information.

27. The method according to claim 25 or 26, wherein the second message further comprises indication information, and the indication information indicates that a transmission direction of the communication content is from the first communication apparatus to the second communication apparatus.

28. The method according to claim 19 or 20, wherein the communication content is transmitted by using a session between the first communication apparatus and the second communication apparatus; and
before the receiving, by the first communication apparatus, the first intent service information corresponding to the communication intent, the method further comprises:
sending, by the first communication apparatus, a third message to a first network element, wherein the third message comprises information indicating the session, and the third message indicates the first network element to transmit, by using the session, the first intent service information with a media network element serving the session.

29. The method according to claim 28, wherein the receiving, by the first communication apparatus, the first intent service information corresponding to the communication intent comprises:
receiving, by the first communication apparatus, a media plane message from the media network element serving the session, wherein a payload payload of the media plane message carries the first intent service information.

30. The method according to any one of claims 1 to 29, wherein the first communication apparatus is a terminal or a chip.

31. A communication apparatus, comprising a unit or a module configured to perform the method according to any one of claims 1 to 30.

32. A communication apparatus, comprising a processor and an interface circuit, wherein the interface circuit is configured to: receive a signal from another communication apparatus and transmit the signal to the processor, or send a signal from the processor to another communication apparatus; and the processor is configured to implement the method according to any one of claims 1 to 30 by using a logic circuit or executing code instructions.

33. A readable storage medium, configured to store a program, wherein the program is executed by one or more processors, to cause an apparatus comprising the one or more processors to perform the method according to any one of claims 1 to 30.

34. A computer program product, wherein the computer program product comprises computer code or a computer program, and when the computer code or the computer program is executed by a computer, the method according to any one of claims 1 to 30 is performed.

35. A communication system, comprising a first network element and a second network element, wherein the first network element is configured to perform the method according to any one of claims 1 to 18, and the second network element is configured to receive information from the first network element and/or send information to the first network element.

36. The method according to claim 35, wherein the communication system further comprises a communication apparatus configured to perform the method according to any one of claims 19 to 30.

37. A communication method, comprising:
recognizing, by a first network element based on communication content sent by a first communication apparatus to a second communication apparatus, a communication intent of a first user using the first communication apparatus;
sending, by the first network element to a second network element, information used to describe the communication intent;
receiving, by the second network element from the first network element, the information used to describe the communication intent, and sending, to the first network element, first intent service information corresponding to the communication intent; and
receiving, by the first network element, the first intent service information from the second network element, and providing a first intent service for the second communication apparatus and/or the first communication apparatus based on the first intent service information.

38. The method according to claim 37, wherein the method further comprises:
sending, by the first communication apparatus, the communication content to the second communication apparatus, wherein the communication content comprises the communication intent of the first user using the first communication apparatus.

39. The method according to claim 38, wherein the method further comprises:
receiving, by the first communication apparatus, the first intent service information corresponding to the communication intent, and invoking an application associated with the first intent service information to output the first intent service information.
